# EUROPÄISCHE PATENTANMELDUNG

(11) **EP 4 822 223 A1**
(43) Veröffentlichungstag der Anmeldung: **14.10.2026**
(21) Anmeldenummer: 26164395.1
(22) Anmeldetag: 12.03.2026
(51) Int. Cl.: F16K 7/12, F16K 27/02, F16K 37/00

(54) **VENTILKÖRPER, PROZESSVENTIL, VERFAHREN UND STEUERGERÄT**

(30) Priorität: 11.04.2025 DE 102025114330
(71) Anmelder: GEMÜ Gebr. Müller Apparatebau GmbH & Co. Kommanditgesellschaft, 74635 Kupferzell (DE)
(72) Erfinder: Magej, Johann, 74523 Schwäbisch Hall (DE); Zuck, Elena, 74206 Bad Wimpfen (DE); Lehner, Nicolas, 74673 Mulfingen-Eberbach (DE); Bauer, Maximilian, 74670 Forchtenberg (DE); Müller, Gert, 74653 Künzelsau (DE)
(74) Vertreter: DREISS Patentanwälte PartG mbB

(57) **Zusammenfassung**

Die Erfindung betrifft einen Ventilkörper (100) für ein Prozessventil, wobei der Ventilkörper (100) umfasst: wenigstens zwei Prozessfluid-Kanäle (110, 120), welche zu zumindest einem Ventilsitz (130) des Ventilkörpers (100) führen und zumindest abschnittsweise gemeinsam mit dem Ventilsitz (130) einen Innenraum (140a, 140b) des Ventilkörpers (100) begrenzen; und wenigstens eine Öffnung (150a, 150b), welche in den Innenraum des Ventilkörpers führt, und welche durch ein licht- und/oder schalltransparentes Element (152a, 152b) verschlossen ist.

## Beschreibung

Die Erfindung betrifft Fortschritte auf dem Gebiet der Prozessventile.

In der Prozesstechnik müssen verschiedene Parameter in der Prozessanlage erfasst und überwacht werden, um unnötigen Ausschuss, insbesondere den Verlust ganzer Batches, zu vermeiden.

Die Probleme des Standes der Technik werden durch einen Ventilkörper gemäß dem Anspruch 1, einem Verfahren gemäß einem nebengeordneten Anspruch, gemäß einem Prozessventil gemäß einem weiteren nebengeordneten Anspruch und gemäß einer Steuereinheit gemäß einem anderen nebengeordneten Anspruch gelöst.

Ein erster Aspekt der Beschreibung betrifft einen Ventilkörper für ein Prozessventil, wobei der Ventilkörper umfasst: wenigstens zwei Prozessfluid-Kanäle, welche zu zumindest einem Ventilsitz des Ventilkörpers führen und zumindest abschnittsweise gemeinsam mit dem Ventilsitz einen Innenraum des Ventilkörpers begrenzen; und wenigstens eine beabstandet von dem Ventilsitz angeordnete Öffnung, welche in einen der zwei Prozessfluid-Kanäle des Innenraums des Ventilkörpers führt oder mündet, und welche durch ein licht- und/oder schalltransparentes Element verschlossen ist.

Durch die in eine Wandung des Ventilkörpers eingebrachte Öffnung, die durch das licht- und/oder schalltransparente Element bzw. Scheibe verschlossen ist, ist es möglich, auf einfache Art und Weise, eine Vielzahl von optischen Anwendungen in den Ventilkörper zu integrieren. Insbesondere können Messungen in Bezug zu dem Innenraum einfacher realisiert werden, da das licht- und/oder schalltransparente Element die Anordnung der Sensorik von der Anordnung in Bezug zu dem Innenraum und von der Fluidkontakt-Thematik entkoppelt. Diese Entkopplung ist insbesondere deshalb vorteilhaft, da die an der optischen Anwendung beteiligten Bauteile keinen im Innenraum herrschenden hohen Drücken und Druckstößen ausgesetzt sind. Vielmehr sorgt das licht- und/oder schalltransparente Element für die Abdichtung des Körpers nach außen und gleichzeitig für ein Sichtfenster in den Innenraum des Ventilkörpers.

Vorteilhaft sind die durch das licht- und/oder schalltransparente Element transmittierten Schallwellen und/oder Lichtwellen von einer Ventilfunktion entkoppelt, was den Einsatzbereich des Ventilkörpers verbessert. Ein vorteilhaftes Beispiel zeichnet sich dadurch aus, dass der Ventilkörper umfasst: wenigstens eine Lichtquelle und/oder Schallquelle, welche eingerichtet ist, in Reaktion auf ein zugeführtes Ansteuersignal Licht und/oder Schall zu erzeugen und das von der wenigstens einen Lichtquelle erzeugte Licht und/oder von der wenigstens einen Schallquelle erzeugten Schall durch das licht- und/oder schalltransparente Element hindurch in den durch das licht- und/oder schalltransparente Element abgetrennten Innenraum des Ventilkörpers einzukoppeln.

Durch das licht- und/oder schalltransparente Element eingekoppeltes Licht bzw. Schall erzeugt eine Beleuchtungswirkung und/oder Beschallungswirkung des mit Prozessfluid gefüllten oder leeren Innenraums. Das licht- und/oder schalltransparente Element ermöglicht Freiheitsgrade bei der Konfiguration der Lichtquelle bzw. der Schallquelle. So muss die Lichtquelle bzw. Schallquelle beispielweise keinen hohen Fluiddrücken widerstehen, da diese sich außerhalb des Innenraums befindet und Atmosphärendruck ausgesetzt ist.

Ein vorteilhaftes Beispiel zeichnet sich dadurch aus, dass das von der wenigstens einen Lichtquelle abgestrahlte Licht zumindest teilweise UV-C-Licht, insbesondere im Wellenlängenbereich von etwa 200 bis 280 Nanometer, umfasst.

Vorteilhaft kann das UVC-Licht zum Keimtöten im Innenraum des Ventilkörpers, also entweder für die Innenwände des Ventilkörpers oder das Prozessfluid verwendet werden. UV-C-Strahlung wirkt, indem sie die DNA oder RNA von Mikroorganismen zerstört. Dadurch werden Bakterien, Viren und andere Keime inaktiviert oder abgetötet.

Ein vorteilhaftes Beispiel zeichnet sich dadurch aus, dass der Ventilkörper umfasst: wenigstens eine Sensoreinrichtung, welche eingerichtet ist, aus dem durch das licht- und/oder schalltransparente Element abtrennten Innenraum einfallendes Licht und/oder Schall zu empfangen und ein Sensorsignal zu erzeugen, welches zumindest eine Charakteristik des durch das licht- und/oder schalltransparente Element einfallenden Lichts und/oder Schalls repräsentiert.

Vorteilhaft kann damit auf einen Zustand innerhalb des Ventilkörpers geschlossen werden, ohne dass der Ventilkörper geöffnet werden muss. Sowohl die Ermittlung eines Zustands eines im Innenraum des Ventilkörpers befindlichen Prozessfluids als auch die Bewertung eines leeren Zustands des Innenraums ist denkbar.

Ein vorteilhaftes Beispiel zeichnet sich dadurch aus, dass die wenigstens eine Sensoreinrichtung dazu eingerichtet ist, zumindest zu einem Teil Wellenlängenbereiche des durch die wenigstens eine Lichtquelle erzeugten und über das licht- und/oder schalltransparente Element in den Innenraum des Ventilkörpers abgestrahlten Lichts zu erfassen und/oder zumindest zu einem Teil Wellenlängenbereiche des durch die wenigstens eine Lichtquelle erzeugten Schalls und über das licht-- und/oder schalltransparente Element in den Innenraum des Ventilkörpers eingekoppelten Schalls zu erfassen.

Vorteilhaft kann die wenigstens eine Lichtquelle und/oder Schallquelle aktiv dazu verwendet werden, um die Zustandsermittlung mit Hilfe der Sensoreinheit zu unterstützen.

Ein vorteilhaftes Beispiel zeichnet sich dadurch aus, dass der Ventilkörper umfasst: eine Mehrzahl von voneinander beabstandet angeordneten Öffnungen, welche jeweils in den Innenraum des Ventilkörpers führen, wobei die jeweilige der Öffnungen durch ein zugeordnetes licht- und/oder schalltransparentes Element verschlossen ist.

Vorteilhaft werden dadurch weitere Möglichkeiten geschaffen, Licht und/oder Schall in den Innenraum einzukoppeln und/oder den Innenraum mittels einer weiteren Sensoreinrichtung zu beobachten.

Ein vorteilhaftes Beispiel zeichnet sich dadurch aus, dass der Ventilkörper umfasst: eine Mehrzahl von Lichtquellen und/oder Schallquellen, welche eingerichtet sind, in Reaktion auf ein jeweils insbesondere individuell zugeführtes Ansteuersignal Licht und/oder Schall zu erzeugen und das von der jeweiligen Lichtquelle erzeugte Licht und/oder den von der jeweiligen Schallquelle erzeugten Schall durch ein jeweils unterschiedliches der Mehrzahl von licht- und/oder schalltransparenten Elementen in den Innenraum des Ventilkörpers einzukoppeln.

Vorteilhaft kann durch ein gezieltes Ein- und Ausschalten der jeweiligen der Mehrzahl der Lichtquellen bzw. Schallquellen eine gewünschte Lichtverteilung bzw. Schallverteilung in den Ventilkörper eingestrahlt werden. So können unterschiedliche Beleuchtungs- bzw. Beschallungsszenarien im Innenraum erzeugt werden.

Ein vorteilhaftes Beispiel zeichnet sich dadurch aus, dass der Ventilkörper umfasst: eine Mehrzahl von Sensoreinrichtungen, welche eingerichtet sind, aus dem durch das zugeordnete licht- und/oder schalltransparente Element abtrennten Innenraum einfallendes Licht und/oder Schall zu empfangen und ein jeweiliges Sensorsignal zu erzeugen, welches die zumindest eine Charakteristik des durch das zugeordnete licht- und/oder schalltransparente Element einfallenden Lichts und/oder Schalls repräsentiert und/oder zumindest eine andere Charakteristik des durch das zugeordnete licht- und/oder schalltransparente Element einfallenden Lichts und/oder Schalls repräsentiert.

Vorteilhaft kann durch Mehrzahl von Sensoreinrichtungen, die unterschiedlichen licht- und/oder schalltransparenten Elementen, die jeweils unterschiedliche Öffnungen im Ventilkörper verschließen, zugeordnet sind eine Vielzahl von Bereichen des Innenraums des Ventilkörpers überwacht werden.

Ein vorteilhaftes Beispiel zeichnet sich dadurch aus, dass der Ventilsitz des Ventilkörpers den Innenraum in einen ersten Teil und einen zweiten Teil, insbesondere in den ersten und zweiten Prozessfluid-Kanal aufteilt, wobei eine erste der Öffnungen in den ersten Teil des Innenraums führt, wobei eine zweite der Öffnungen in den zweiten Teil des Innenraums führt.

Vorteilhaft kann der Innenraum so von zwei unterschiedlichen Seiten des Ventilsitzes beobachtet und/oder beleuchtet und/oder beschallt werden. So ergeben sich Vorteile bei der Lichteinkopplung und -erfassung.

Ein vorteilhaftes Beispiel zeichnet sich dadurch aus, dass die wenigstens eine Sensoreinrichtung oder die Mehrzahl von Sensoreinrichtungen eingerichtet ist/sind, zumindest ein digitales Bild, welches einen Zustand zumindest eines Teils des Innenraums des Ventilkörpers repräsentiert, als die zumindest eine Charakteristik in Form des wenigstens einen Sensorsignals oder in Form des jeweiligen der Mehrzahl von Sensorsignalen zu erzeugen.

Das Vorsehen einer solchen Sensoreinrichtung bildet die Basis für eine detaillierte Analyse des Innenraums während des Betriebs des Prozessventils. Insbesondere wird dadurch vorteilhaft erreicht, dass eine Inspektion des Innenraums ohne eine Demontage der einzelnen Komponenten möglich ist. Damit können auf Basis des bildgebenden Sensorsignals konkrete Hinweise auf einen sich ausbreitenden Defekt im Innenraum getroffen werden.

Vorteilhaft ist es somit möglich zumindest während Betriebsphasen, in denen das Prozessventil frei von Prozessfluid ist, maschinell oder durch einen Menschen begutachtbare Aufnahmen der im Normalbetrieb von Prozessfluid benetzten Nassseite der Membran zu tätigen, ohne dass das Prozessventil demontiert werden muss.

Die Ventilmembrane kann insbesondere in einer mediumsfreien Zeitdauer, beispielsweise zeitlich nach einer Reinigung, in ihrer Bewegung gefilmt werden, indem eine Mehrzahl von Bildern ermittelt wird. Dadurch könnten versteckte Falten oder Risse besser erkannt werden. In anderen Worten: Es werden in kleinen Hubschritten eine Mehrzahl von Bildern erstellt. Hintergrund ist, dass ein vorhandener Riss nur in einer bestimmten Stellung der Ventilmembran sichtbar ist und dieser mit nur einem Foto in einer "ungünstigen" Stellung der Ventilmembrane übersehen werden kann. Die Überwachung wird damit weiter verbessert.

Ein vorteilhaftes Beispiel zeichnet sich dadurch aus, dass ein Bereich des Ventilkörpers, in welchem sich im Betrieb des Prozessventils ein Absperrkörper zu einem Öffnen und Schließen des Prozessventils bewegt, zumindest abschnittsweise in einem Bildfeld der wenigstens einen oder jeweiligen Sensoreinrichtung liegt.

So ist es möglich, dass die Sensoreinrichtung ein Bild erzeugt, welches die nassseitige Oberfläche des Absperrkörpers und deren aktuellen Zustand im eingebauten Zustand abbildet.

Ein vorteilhaftes Beispiel zeichnet sich dadurch aus, dass die zumindest eine Lichtquelle, welche gemeinsam einem ersten zugeordneten der Mehrzahl von licht- und/oder schalltransparenten Elementen eingerichtet ist, insbesondere monochromatisches Licht in Form einer insbesondere kollimierten Lichtverteilung entlang einer Hauptabstrahlrichtung in den Innenraum des Ventilkörpers einzukoppeln; und die wenigstens eine Sensoreinrichtung, wobei die wenigstens eine Sensoreinrichtung gemeinsam mit einem zweiten zugeordneten licht- und/oder schalltransparenten Element dazu eingerichtet ist, zumindest eine Lichtintensität von durch Schwebeteilchen in einem Prozessfluid gestreutem Licht der entlang der Hauptabstrahlrichtung abgestrahlten und insbesondere kollimierten Lichtverteilung zu erfassen.

Die Sensoreinrichtung misst also die Intensität des von den Schwebeteilchen gestreuten Lichts. Da diese Intensität proportional zur Konzentration der Schwebeteilchen in dem Prozessfluid ist, lässt sich daraus die Trübung des in dem Innenraum vor der Sensoreinrichtung befindlichen Prozessfluids bestimmen. Auf Basis der Trübung lässt sich zwischen verschiedenen gestellten Prozessmedien unterscheiden.

Ein vorteilhaftes Beispiel zeichnet sich dadurch aus, dass der Ventilkörper umfasst: wenigstens einen Verspann-Abschnitt zum Anliegen eines lateralen Bereichs eines als Ventilmembran ausgebildeten Absperrkörpers, wobei der Verspannabschnitt eine Sitz-Öffnung zum Verschließen mittels der Ventilmembran umgibt, und wobei die Sitz-Öffnung in den Innenraum des Ventilkörpers und zu dem Ventilsitz führt.

Ein zweiter Aspekt der Beschreibung betrifft ein Prozessventil, das umfasst: den Ventilkörper gemäß dem ersten Aspekt; einen Absperrkörper, insbesondere eine Ventilmembran, welcher in einer geschlossenen Position des Prozessventils auf den Ventilsitz des Ventilkörpers drückt und einen Fluidfluss durch das Prozessventil blockiert, und welcher in einer geöffneten Position des Prozessventils vom Ventilsitz abgehoben ist und den Fluidfluss durch das Prozessventil erlaubt; einen Antrieb zum Bewegen einer Ventilstange, wobei die Ventilstange entlang einer Stellachse bewegbar gelagert ist und den Absperrkörper bewegt.

Ein dritter Aspekt der Beschreibung betrifft ein Verfahren zum Betreiben eines Prozessventils. Das Verfahren umfasst: Betreiben wenigstens einer Lichtquelle zur Erzeugung von Licht in Reaktion auf ein zugeführtes Ansteuersignal, wobei das von der wenigstens einen Lichtquelle erzeugte Licht durch ein licht- und/oder schalltransparentes Element in einen durch das licht- und/oder schalltransparente Element abgetrennten Innenraum eines Ventilkörpers des Prozessventils eingekoppelt wird, und wobei das licht- und/oder schalltransparente Element eine Öffnung, die in den Innenraum des Ventilkörpers führt, verschließt; und/oder Betreiben wenigstens einer Sensoreinrichtung zur Erzeugung eines Sensorsignals, welches zumindest eine Charakteristik eines durch das licht- und/oder schalltransparente Element und die Öffnung verschließende Element einfallenden Lichts oder eine Charakteristik eines durch ein weiteres licht- und/oder schalltransparentes Element und eine weitere Öffnung des Ventilkörpers verschließendes Element repräsentiert.

Vorteilhaft lässt sich so Licht in den Innenraum des Ventilkörpers einstrahlen und/oder sensieren.

Ein vorteilhaftes Beispiel zeichnet sich dadurch aus, dass das von der wenigstens einen Sensoreinrichtung erzeugte Sensorsignal wenigstens ein digitales Bild umfasst, welches zumindest einen ersten Abschnitt einer im Bildfeld der wenigstens einen Sensoreinrichtung befindlichen nassseitigen Oberfläche des Absperrkörpers repräsentiert.

Vorteilhaft ist es somit möglich zumindest während Betriebsphasen, in denen das Prozessventil frei von Prozessfluid ist, maschinell oder durch einen Menschen begutachtbare Aufnahmen der im Normalbetrieb von Prozessfluid benetzten Nassseite der Membran zu tätigen, ohne dass das Prozessventil demontiert werden muss.

Ein vorteilhaftes Beispiel zeichnet sich dadurch aus, dass das Verfahren umfasst: Öffnen des Prozessventils, wobei ein den Innenraum des Prozessventils begrenzender Absperrkörper des Prozessventils vom Ventilsitz zumindest abschnittsweise abgehoben ist; und Betreiben der wenigstens einen Lichtquelle und gleichzeitiges Betreiben der wenigstens einen Sensoreinrichtung zum Ermitteln des wenigstens einen digitalen Bildes während der Absperrkörper zumindest abschnittsweise vom Ventilsitz abgehoben ist.

Vorteilhaft befindet sich damit ein größerer erfassbarer Teil der nassseitigen Oberfläche des Absperrkörpers im Bildfeld der Kamera. Insbesondere kann damit ein Dichtabschnitt der nassseitigen Oberfläche oder zumindest ein daran angrenzender Teil von der Sensoreinrichtung erfasst werden. Dadurch ist auch der für die Schließfunktion relevante Dichtabschnitt der nassseitigen Oberfläche des Absperrkörpers erfassbar.

Ein vorteilhaftes Beispiel zeichnet sich dadurch aus, dass das Verfahren umfasst: Betreiben der wenigstens einen Lichtquelle zur Erzeugung von Licht, welches in den Innenraum des Ventilkörpers eingekoppelt wird; Betreiben, während das von der wenigstens einen Lichtquelle erzeugte Licht in den Innenraum eingestrahlt wird, der wenigstens einen Sensoreinrichtung zum Ermitteln des wenigstens einen digitalen Bildes, insbesondere während der Absperrkörper zumindest abschnittsweise vom Ventilsitz abgehoben ist, wobei die wenigstens eine Sensoreinrichtung aus dem durch das licht- und/oder schalltransparente Element abtrennten ersten Teil des Innenraums einfallendes Licht empfängt, wobei der erste Teil und ein zweiter Teil des Innenraums durch einen Ventilsitz getrennt sind; Betreiben, während das von der wenigstens einen Lichtquelle erzeugte Licht in den Innenraum eingestrahlt wird, einer weiteren Sensoreinrichtung zum Ermitteln wenigstens eines weiteren digitalen Bildes, insbesondere während der Absperrkörper zumindest abschnittsweise vom Ventilsitz abgehoben ist, wobei die weitere Sensoreinrichtung aus dem durch das licht- und/oder schalltransparente Element abtrennten zweiten Teil des Innenraums einfallendes Licht empfängt.

Vorteilhaft kann mit der weiteren Sensoreinrichtung die nassseitige Oberfläche aus einer weiteren Perspektive maschinell oder durch einen Menschen begutachtet werden.

Ein vorteilhaftes Beispiel zeichnet sich dadurch aus, dass das Verfahren umfasst: Schließen des Prozessventils, ein Absperrkörper des Prozessventils auf einen Ventilsitz auffährt und den Innenraum des Prozessventils in einen ersten Teil des Innenraums und einen zweiten Teil des Innenraums teilt; Betreiben der wenigstens einen Lichtquelle zur Erzeugung von Licht in einem Zeitraum nach dem Schließen des Prozessventils, die wenigstens eine Lichtquelle ihr Licht über eine licht- und/oder schalltransparente Scheibe, welche einen zweiten Teil des Innenraums begrenzt, in den zweiten Teil des Innenraums einstrahlt; Betreiben der wenigstens einen Sensoreinrichtung zur Erzeugung des Sensorsignals, welches wenigstens eine Lichtintensität als Charakteristik des Lichts, welches durch die licht- und/oder schalltransparente Scheibe aus dem ersten Teil des Innenraums einfällt und von der Sensoreinrichtung empfangen wird, repräsentiert, wobei die wenigstens eine Sensoreinrichtung zeitlich nach dem Schließen des Prozessventils und während des Betreibens der wenigstens einen Lichtquelle zum Einstrahlen von Licht in den zweiten Teil des Innenraums betrieben wird; und Ermitteln einer Schließqualität des Prozessventils in Abhängigkeit von der wenigstens einen Lichtintensität.

Vorteilhaft kann mit dem vorgeschlagenen Verfahren sicher sensiert werden, ob das Prozessventil sicher schließt oder nicht. Ist die Lichtintensität oberhalb eines Schwellwerts kann auf ein Dichtheitsproblem geschlossen werden.

Ein vorteilhaftes Beispiel zeichnet sich dadurch aus, dass das Verfahren umfasst: Ermitteln eines ersten Trübungs-Wertes des Prozessfluids in Abhängigkeit von dem zu einem ersten Zeitpunkt erzeugten Sensorsignal der wenigstens einen Sensoreinrichtung; Ermitteln eines zweiten Trübungs-Wertes des Prozessfluids in Abhängigkeit von dem zu einem zeitlich nach dem ersten Zeitpunkt liegenden zweiten Zeitpunkt erzeugten Sensorsignals der wenigstens einen Sensoreinrichtung; und Schließen des Prozessventils in Abhängigkeit von dem ersten Trübungswert und in Abhängigkeit von dem zweiten Trübungswert, insbesondere sobald ein Unterschied zwischen dem ersten Trübungs-Wert und dem zweiten Trübungs-Wert einen Grenzwert überschreitet.

Vorteilhaft werden durch das vorgeschlagene Verfahren Verluste bei der Phasentrennung von Reinigungsmedien vermieden. Es kann vielmehr punktgenau zwischen verschiedenen Medien unterschieden werden. Damit kann also festgestellt werden, ab welchem Zeitpunkt ein anderes Medium durch das Prozessventil fließt. Ein Sicherheitspuffer, bei dem zu viel Rücklauf in das Abwasser geleitet wird, anstatt es für weitere Reinigungsvorgänge in Tanks einzulagern, wird vermieden. Somit umfasst das Reinigungsfluid weniger von dem tatsächlich gestellten Prozessfluid, womit der Verbrauch von Reinigungsfluid reduziert wird. Die Umwelteigenschaften der Prozessanlage insgesamt werden somit verbessert.

In einem anderen Anwendungsbeispiel müssen beispielsweise in Molkereien beim Leerschieben von Anlagen eine punktgenaue Phasentrennung von Milch und Wasser durchgeführt werden, um Produktverluste zu vermeiden. Gemäß dem Stand der Technik wird der Trennvorgang mit einem Schauglas oder anhand einer Zeitsteuerung durchgeführt. Dies bedeutet hohe Produktverluste und bei der manuellen Umschaltung auch einen zusätzlichen Personalaufwand sowie Qualitätsunterschiede. Durch die nunmehr geschaffene Trübheitsüberwachung und das gezielte Medien-Trennen in Abhängigkeit von dem ersten und zweiten Trübungs-Wert werden die Nachteile des Standes der Technik überwunden.

Ein vorteilhaftes Beispiel zeichnet sich dadurch aus, dass das Verfahren umfasst: Übermitteln, mittels einer Kommunikationsschnittstelle, insbesondere in Richtung eines mobilen Endgeräts und/oder in Richtung einer Prozesssteuerung, des wenigstens einen Sensorsignals und/oder wenigstens eines daraus abgeleiteten Parameters.

Vorteilhaft kann im Bereich der Prozesssteuerung eine Überwachung des Prozessventils verbessert werden.

Wird das mobile Endgerät genutzt, so ist es möglich, dass das Betriebspersonal vor Ort das Sensorsignal oder den daraus abgeleiteten Parameter begutachtet. Insbesondere können indizierte Schäden anhand des zweidimensionalen digitalen Bildes begutachtet werden, ohne dass der Absperrkörper ausgebaut werden muss.

Ein weiterer Aspekt der Beschreibung betrifft eine Steuereinheit für ein Prozessventil wobei die Steuereinheit dazu ausgebildet ist, das Verfahren gemäß dem zuvor beschriebenen Aspekt auszuführen.

In der Zeichnung zeigen:
- Fig. 1: einen Ventilkörper in schematischer Form;
- Fig. 2: ein Beispiel des Ventilkörpers in schematischer Form;
- Fig. 3: ein weiteres Beispiel des Ventilkörpers in schematischer Form;
- Fig. 4: ein Beispiel des Ventilkörpers in schematischer Form mit zwei Sensoreinrichtungen und zwei Lichtquellen;
- Fig. 5: einen Schnitt des Ventilkörpers;
- Fig. 6: ein Ablaufdiagramm eines Verfahrens;
- Fig. 7: ein Ablaufdiagramm eines weiteren Verfahrens;
- Fig. 8: schematisch dargestellte digital erzeugte Bilder aus einem Innenraum des Ventilkörpers, welche mittels der Sensoreinrichtung ermittelt wurden;
- Fig. 9: einen Erfassungsbereich auf einer Ventilmembran in schematischer Form;
- Fig. 10: zwei Erfassungsbereiche auf der Ventilmembran in schematischer Form;
- Fig. 11: ein Ablaufdiagramm eines anderen Verfahrens;
- Fig. 12: ein Ablaufdiagramm eines weiteren anderen Verfahrens;
- Fig. 13: ein anderes Beispiel des Ventilkörpers in schematischer Form;
- Fig. 14: ein Schnitt einer Weiterbildung des Ventilkörpers aus Figur 13;
- Fig. 15: ein Ablaufdiagramm eines Verfahrens zur Trübungsmessung;
- Fig. 16: einen schematischen Schnitt eines licht- und/oder schalltransparenten Elements, welches in einer Öffnung des Ventilkörpers angeordnet ist;
- Fig. 17: eine perspektivische Darstellung des Ventilkörpers; und
- Fig. 18: ein Prozessventil und eine Steuereinheit in schematischer Form.

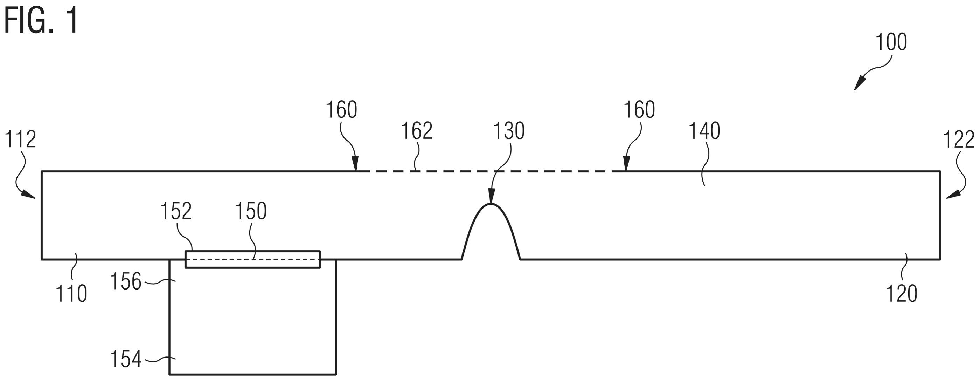

Figur 1 zeigt einen Ventilkörper 100 für ein Prozessventil in schematischer Darstellung. Der Ventilkörper 100 umfasst wenigstens zwei Prozessfluid-Kanäle 110, 120, welche von einem jeweiligen Prozessfluid-Anschluss 112, 122 zu zumindest einem Ventilsitz 130 des Ventilkörpers 100 führen und zumindest abschnittsweise gemeinsam mit dem Ventilsitz 130 einen Innenraum 140 des Ventilkörpers 100 begrenzen. Wenigstens eine Öffnung 150, welche in den Innenraum des Ventilkörpers führt, ist durch ein licht- und/oder schalltransparentes Element 152 verschlossen.

Die wenigstens eine Öffnung 152 führt durch eine Wandung des Ventilkörpers 100 und ist beabstandet von dem Ventilsitz 130 angeordnet.

Das Element 152 verschließt die wenigstens eine Öffnung 152. Das Element 152 hat eine für Kontakt mit Prozessfluid ausgebildete Oberfläche, die dem Prozessfluid-Kanal 110, 120 zugeordnet ist.

Die dem Prozessfluid-Kanal 110, 120 zugeordnete Oberfläche des Elements 152 ist Teil der Innenoberfläche des zugeordneten Prozessfluid-Kanals 110, 120.

Die dem zugeordneten Prozessfluid-Kanal 110, 120 zugewandte Oberfläche des Elements 152 bildet abschnittsweise eine den zugeordnete Prozessfluid-Kanal 110, 120 begrenzende Innenwandung.

Die vorangenannte Oberfläche des Elements 152 schließt bündig mit der angrenzenden Innenwandung des Ventilkörpers 100 ab.

Das licht- und/oder schalltransparente Element 152 ist vorzugsweise aus Glas, insbesondere Saphirglas, Borosilikatglas oder Quarzglas, hergestellt, wobei alternativ auch transparente Kunststoffe als geeignete Werkstoffe in Betracht gezogen werden können. Das licht- und/oder schalltransparente Element 152 kann auch als licht- und/oder schalltransparente Scheibe bezeichnet werden, da Lichtstrahlen zu einem größeren Teil (>50%) das Element 152 passieren, ohne innerhalb des Elements 152 beispielsweise an Seitenflächen reflektiert zu werden.

Die Lichttransparenz des Elements 152 bezieht sich auf das Durchlassen von Licht in einem oder mehrere Wellenlängenbereiche. Das transmittierte Licht kann für den Menschen sichtbare und/oder nicht sichtbare Wellenlängenbereiche umfassen.

Die Schalltransparenz des Elements 152 bezieht sich auf das Durchlassen von Schall in einem oder mehreren Wellenlängenbereiche. Der transmittierte Schall kann für den Menschen hörbare oder nicht hörbare Wellenlängen umfassen.

Eine innere Oberfläche des licht- und/oder schalltransparenten Elements 152 begrenzt gemeinsam mit einer inneren Oberfläche einer Wandung 102 des Ventilkörpers 100 den Innenraum 140 des Ventilkörpers 100.

Die Öffnung 150 ist in die nicht-lichttransparente Wandung 102 des Ventilkörpers 100 eingebracht. Die Wandung 102 weist eine innere Oberfläche auf, welche im Betrieb des Prozessventils in Kontakt mit dem Prozessfluid steht. Das licht- und/oder schalltransparente Element 152 umfasst die innere Oberfläche, welche im Betrieb des Prozessventils in Kontakt mit dem Prozessfluid steht.

Die Öffnung 150 in der Wandung 102 ist zur Aufnahme des licht- und/oder schalltransparenten Elements 152 ausgebildet.

Die Wandung 102 des Ventilkörpers ist beispielsweise aus Edelstahl, einem Flourkunststoff oder einem anderen Kunststoff hergestellt.

Das licht- und/oder schalltransparente Element 152 ermöglicht den Durchlass von Licht über ein breites Spektrum, insbesondere im Bereich des sichtbaren Lichts, aber auch für ultraviolettes, UV-, und infrarotes, IR-, Licht sowie weitere relevante Wellenlängen. Dabei wird vorausgesetzt, dass das Licht, das auf das licht- und/oder schalltransparente Element 152 trifft, in ausreichendem Maße auf der gegenüberliegenden Seite austritt, sodass eine Beeinträchtigung der ursprünglichen Lichtintensität oder -charakteristik im praktischen Anwendungskontext nicht von wesentlicher Bedeutung ist.

Das licht- und/oder schalltransparente Element 152 ist so ausgelegt, dass es auch bei erheblichen mechanischen Belastungen - insbesondere bei einem Druckunterschied von mehreren Bar zwischen dem Innenraum 140 und dem Außenraum bzw. dem Trockenraum 154, in dem sich weitere optische Einheiten befinden, - seine lichttransparenten Eigenschaften und seine abdichtenden Eigenschaften beibehält. Die Materialwahl und die Konstruktion des Elements sind also derart beschaffen, dass auch unter hohen Druckbelastungen keine signifikante Veränderung oder Beeinträchtigung der Lichtdurchlässigkeit erfolgt und gleichzeitig eine Dichtheit nach außen gewährleistet ist.

Der Trockenraum 154 ist beispielsweise mittels einer Wandung 156 von einem Außenraum des Ventilkörpers optisch so abgeschottet, dass kein Außenlicht in den Trockenraum 154 eindringt.

Der Ventilkörper 100 umfasst wenigstens einen Verspann-Abschnitt 160 zum Anliegen eines lateralen Bereichs eines als Ventilmembran ausgebildeten Absperrkörpers 200, wobei der Verspannabschnitt 160 eine Sitz-Öffnung 162 zum Verschließen mittels der Ventilmembran umgibt, und wobei die Sitz-Öffnung 162 in den Innenraum 140 des Ventilkörpers 100 und zu dem Ventilsitz 130 führt.

Ist der Ventilkörper 100 hingegen für einen andersartig ausgebildeten Absperrkörper vorgesehen, so entfällt der Verspann-Abschnitt 160 für die Ventilmembran. So können im Falle von Sitzventilen beispielsweise Absperrkörper gemeinsam mit einem Teil der Ventilstange innerhalb des Innenraums 140 bewegt werden.

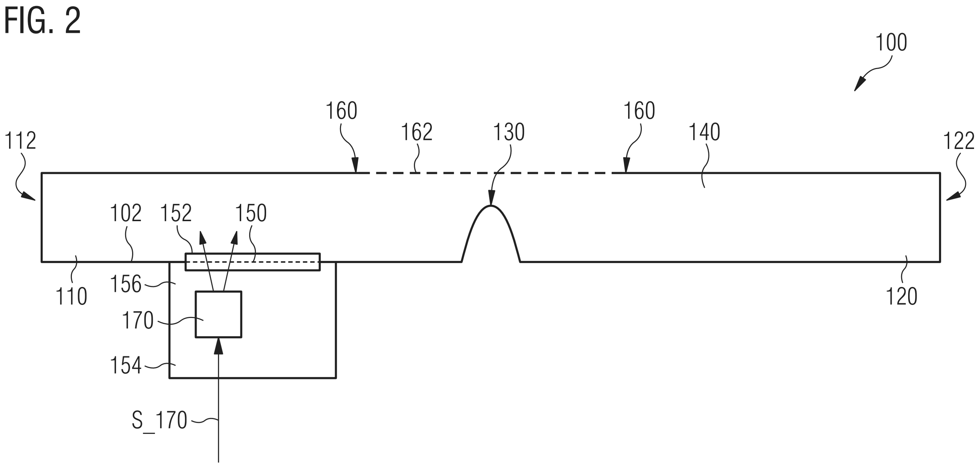

Figur 2 zeigt in schematischer Form ein Beispiel des Ventilkörpers 100. Es ist wenigstens eine Lichtquelle 170 im Trockenraum 154 angeordnet, welche eingerichtet ist, in Reaktion auf ein zugeführtes Ansteuersignal S_170 Licht zu erzeugen und das von der wenigstens einen Lichtquelle 170 erzeugte Licht durch das lichttransparente Element 152 in den durch das lichttransparente Element 152 abgetrennten Innenraum 140 des Ventilkörpers 100 einzukoppeln.

In einem Beispiel umfasst das von der wenigstens einen Lichtquelle 170 abgestrahlte Licht zumindest teilweise UV-C-Licht, insbesondere im Wellenlängenbereich von etwa 200 bis 280 Nanometer.

Die wenigstens eine Lichtquelle 170 erzeugt in einem weiteren Beispiel Licht über ein breites Spektrum, insbesondere im Bereich des sichtbaren Lichts. In einem anderen Beispiel erzeugt die wenigstens eine Lichtquelle 170 ultraviolettes, UV-, und/oder infrarotes, IR-, Licht.

Die wenigstens eine Lichtquelle 170 umfasst beispielsweise wenigstens eine Halbleiterlichtquelle.

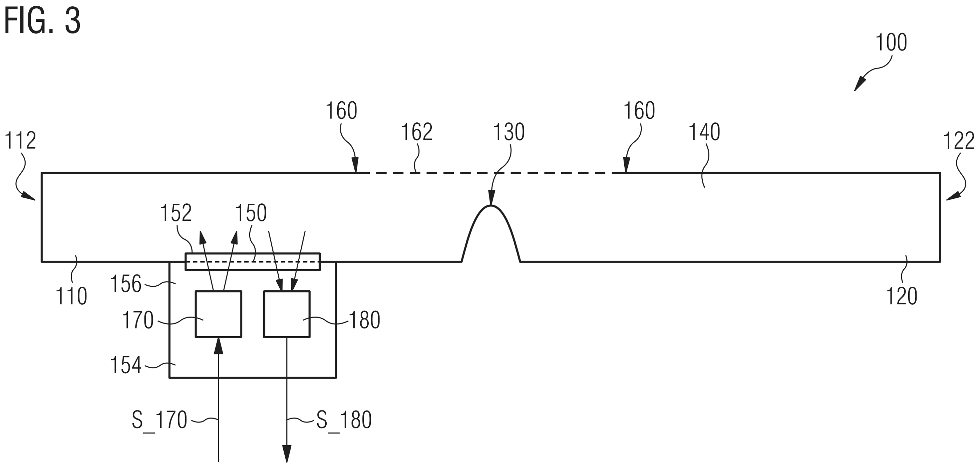

Figur 3 zeigt ein weiteres Beispiel des Ventilkörpers 100 in schematischer Form. Es ist wenigstens eine Sensoreinrichtung 180 vorgesehen, welche eingerichtet ist, aus dem durch das lichttransparente Element 152 abgetrennten Innenraum 140 einfallendes Licht zu empfangen und ein Sensorsignal S_180 zu erzeugen, welches zumindest eine Charakteristik des durch das lichttransparente Element 152 auf die Sensoreinrichtung 180 einfallenden Lichts repräsentiert.

Es ist in einem Beispiel vorgesehen, dass die wenigstens eine Sensoreinrichtung 180 dazu eingerichtet ist, zumindest zu einem Teil Wellenlängenbereiche des durch die wenigstens eine Lichtquelle 170 erzeugten und über das lichttransparente Element 152 in den Innenraum 140 des Ventilkörpers 100 abgestrahlten Lichts zu erfassen.

Im gezeigten Beispiel ist die wenigstens eine Lichtquelle 170 vorgesehen, um Licht in den Innenraum 140 einzukoppeln. Die Lichtquelle 170 kann aber auch an einer anderen, in Figur 3 nicht gezeigten Öffnung angeordnet werden, um Reflexionen und/oder Lichteinkopplungen in die Sensoreinrichtung 180 zu vermeiden.

Die wenigstens eine Sensoreinrichtung 180 kann einen Photosensor, der eine Lichtintensität misst, also beispielsweise als Photodiode, und/oder ein Bildsensor wie eine Kamera mit matrixartig angeordneten Lichtsensoren umfassen, um ein zweidimensionales digitales Bild, insbesondere Farbbild, zu ermitteln.

Die wenigstens eine Sensoreinrichtung 180 ist also beispielsweise dazu konfiguriert, ein digitales Bild zumindest eines Teils der nassseitigen Oberfläche der eingebauten Ventilmembran zu erfassen und dabei hochauflösende Bild- und Oberflächendaten zu generieren. Die Sensoreinrichtung 180 umfasst ein einziges Sensormodul oder eine Kombination aus mehreren Sensormodulen, die jeweils für spezifische Erfassungsaufgaben ausgelegt sind und gemeinsam eine umfassende Analyse der nassseitigen Oberfläche der Ventilmembran ermöglichen.

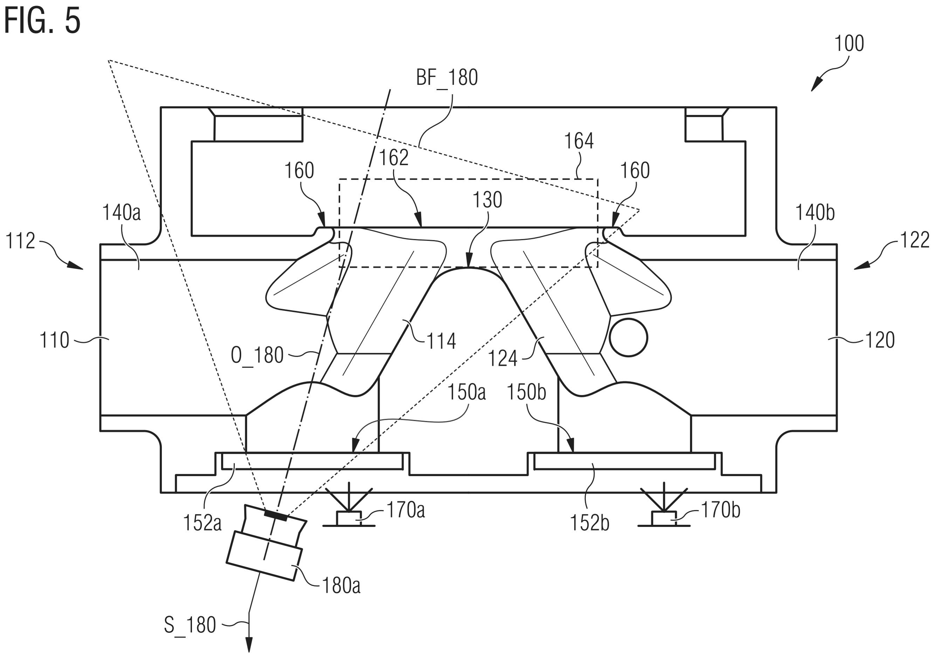

Die nassseitige Oberfläche der Ventilmembran kann sich je nach Größe des Ventilkörpers 100 in einem Abstand von etwa 2 cm bis 20 cm von der Sensoreinrichtung 180 befinden. Die Erfassung erfolgt durch einen Tunnel-förmigen Abschnitt des Prozessfluidkanals, der die Sichtgeometrie und den Blickwinkel der wenigstens einen Sensoreinrichtung 180 auf die Oberfläche einschränkt (Siehe Figur 5). Die wenigstens eine Sensoreinrichtung 180 ist so ausgelegt, dass sie die physikalischen Einschränkungen durch die begrenzte Sicht und die Glasabdeckung kompensiert. Die Erfassung der Oberflächendaten erfolgt mit hoher Auflösung im Bereich von weniger als 0,1 mm, insbesondere im Bereich von 1-10 µm bis hin zu Nanometerauflösung, um kleinste Strukturen, wie Risse, Falten und Oberflächenverformungen, zuverlässig zu detektieren.

Die wenigstens eine Sensoreinrichtung 180a umfasst wenigstens eines der folgenden Sensormodule:
(1) Bildsensor: Der Bildsensor ist in der Lage, hochauflösende Bilddaten von der nassseitigen Oberfläche der Ventilmembran zu erfassen. Der Bildsensor umfasst beispielsweise eine telezentrische Linse mit hoher Tiefenschärfe und geringer Verzerrung, die eine scharfe Abbildung der nassseitigen Oberfläche der Ventilmembran ermöglicht. Der Bildsensor verwendet einen CMOS- oder CCD-Sensor mit einer Pixelgröße im Bereich von 1-5 µm, um feinste Details der nassseitigen Oberfläche der Ventilmembran zu erfassen. Eine adaptive Polarisationsfiltereinheit ist integriert, um Reflexionen von dem lichttransparenten Element zu kompensieren und die Signalqualität zu verbessern. Die automatische Fokuseinstellung erfolgt beispielsweise durch einen piezoelektrischen Aktuator, der den Fokus an die variable Entfernung zur Oberfläche (innerhalb des Bereichs von 2 cm bis 20 cm) anpasst. Der Bildsensor erfasst zweidimensionale Oberflächendaten und ermöglicht eine anschließende Bildanalyse mit Hilfe künstlicher Intelligenz (KI). Die KI-gestützte Analyse identifiziert und klassifiziert Oberflächendefekte wie Risse, Falten, Kratzer. Der Bildsensor arbeitet vorzugsweise im sichtbaren und/oder nahen Infrarotbereich (400 nm - 1100 nm), um eine hohe Bildqualität auch unter schwierigen Lichtverhältnissen sicherzustellen.
(2) Konfokaler Sensor: Der konfokale Sensor basiert auf einer Punktabtastung und ist darauf ausgelegt, die Topografie der nassseitigen Oberfläche der Ventilmembran mit hoher Präzision zu erfassen. Der konfokale Sensor umfasst eine Laserquelle (z. B. roter, blauer oder Infrarotlaser) im Sinne der Lichtquelle 170a und ein chromatisches Linsensystem, das die Trennung der Wellenlängenkomponenten des reflektierten Lichts ermöglicht. Ein Spektrometer analysiert die Wellenlängenverschiebung des reflektierten Lichts und liefert daraus Höheninformationen der Oberfläche. Die Auflösung des konfokalen Sensors liegt im Bereich von 1-10 nm in lateraler Richtung und bis zu 10 nm in axialer Richtung. Die Punktabtastung erfolgt entlang einer definierten Scan-Linie oder Matrix und ermöglicht die hochpräzise Erfassung der Oberflächentopografie. Der konfokale Sensor erkennt mikroskopische Strukturen, einschließlich feiner Risse, Falten und Unebenheiten auf der nassseitigen Oberfläche. Die chromatische Aufspaltung des Lichts ermöglicht eine zuverlässige Messung durch die Glasscheibe hindurch, ohne dass die Signalqualität durch Brechung oder Reflexion beeinträchtigt wird.
(3) Laser-Triangulationssensor: Der Laser-Triangulationssensor ist darauf ausgelegt, die Höhe und Struktur der nassseitigen Oberfläche der Ventilmembran durch Triangulation des reflektierten Laserstrahls zu bestimmen. Der Sensor umfasst eine Laserdiode im Sinne der Lichtquelle 180a mit einer definierten Wellenlänge (z. B. 650 nm) und ein CMOS-Sensorelement zur Bestimmung der Position des reflektierten Laserstrahls. Der Abstand zur nassseitigen Oberfläche der Ventilmembran wird aus der Abweichung der Reflexionsposition bestimmt. Ein Polarisationsfilter ist integriert, um störende Reflexionen von dem lichttransparenten Element zu unterdrücken und die Signalqualität zu optimieren. Der Laser-Triangulationssensor arbeitet mit einer Auflösung im Bereich von 1-10 µm und einer Abtastgeschwindigkeit von bis zu 10 kHz, wodurch eine schnelle und hochpräzise Erfassung der Oberflächentopografie möglich ist. Der Laser-Triangulationssensor eignet sich insbesondere für die Erkennung von Falten, Rissen und Oberflächenunregelmäßigkeiten auf der nassseitigen Oberfläche der Ventilmembran, selbst bei komplexen Oberflächenstrukturen und variierenden Oberflächenreflexionen.
(4) Kohärenztomografie-Sensor (OCT): Der Kohärenztomografie-Sensor (OCT) verwendet kohärentes infrarotes Licht zur dreidimensionalen Tiefenmessung der nassseitigen Oberfläche der Ventilmembran. Der Sensor arbeitet mit einer Auflösung im Bereich von 1-10 µm und einer Eindringtiefe von bis zu 3 mm. Der OCT-Sensor ist in der Lage, interne Materialunterschiede und sogar unter der Oberfläche liegende Defekte zu erkennen. Das Messprinzip basiert auf einem interferometrischen Ansatz, bei dem die Phasenverschiebung des reflektierten Lichts analysiert wird, um Tiefen- und Strukturinformationen zu gewinnen. Der OCT-Sensor ist besonders geeignet für die Analyse komplexer Oberflächen, mehrschichtiger Materialien und tiefliegender Defekte.
(5) Telezentrisches Kamerasystem: Das telezentrische Kamerasystem umfasst eine telezentrische Linse mit parallelem Strahlengang und ein hochauflösendes CMOS- oder CCD-Sensorelement. Die telezentrische Optik erzeugt ein verzerrungsfreies Bild der Oberfläche und liefert eine hohe Tiefenschärfe. Das Kamerasystem ist mit einer Reflexionskompensationsoptik ausgestattet, um Reflexionen von der Glasscheibe bzw. dem lichttransparenten Element zu unterdrücken. Das Kamerasystem liefert zweidimensionale Bilddaten mit hoher Auflösung und ermöglicht eine anschließende Analyse mit künstlicher Intelligenz. Die Erkennung von Rissen, Falten und Materialübergängen erfolgt automatisiert durch eine separate Bildverarbeitungssoftware.
(6) Lidar-System: Das Lidar-System ist darauf ausgelegt, die dreidimensionale Struktur der nassseitigen Oberfläche der Ventilmembran mit hoher Präzision und Geschwindigkeit zu erfassen. Das System verwendet einen gepulsten Laserstrahl beispielsweise mit einer Wellenlänge im sichtbaren oder nahen Infrarotbereich (z. B. 905 nm oder 1550 nm) und einen hochempfindlichen Empfänger, wie beispielsweise einen Avalanche-Photodioden (APD)-Empfänger, zur Detektion der reflektierten Signale. Das Lidar-System arbeitet nach dem Time-of-Flight-Prinzip (ToF), bei dem die Laufzeit des reflektierten Laserpulses gemessen wird, um die Entfernung zur Oberfläche mit einer Genauigkeit im Bereich von 10-100 µm zu bestimmen. Der Laserstrahl wird durch ein Mikrospiegel-Array oder eine rotierende Prismenoptik gelenkt, wodurch eine flächendeckende Abtastung der nassseitigen Oberfläche der Ventilmembran in hoher Auflösung erfolgt. Die Abtastrate des Systems liegt im Bereich von bis zu 1 MHz, was eine schnelle Erfassung selbst bei komplexen Oberflächengeometrien und bewegten Objekten ermöglicht. Das Lidar-System ist mit einer adaptiven Polarisationsfiltereinheit ausgestattet, um störende Reflexionen durch die Glasscheibe oder das lichttransparente Element zu kompensieren und die Signalqualität zu maximieren. Die erfassten Rohdaten werden durch ein eingebettetes Signalverarbeitungssystem in Echtzeit analysiert. Eine KI-gestützte Auswertung ermöglicht die präzise Erkennung und Klassifikation von Oberflächendefekten wie Rissen, Falten, Kratzern und Unebenheiten. Die KI-gestützte Analyse erfolgt unter Berücksichtigung von Mustern in der Oberflächentopografie, um selbst kleinste Unregelmäßigkeiten zu erkennen. Das Lidar-System ist besonders geeignet für die Inspektion von komplexen Oberflächenstrukturen und Bereichen mit unterschiedlicher Reflexionsintensität. Durch die hohe Abtastgeschwindigkeit und die hohe laterale und axiale Auflösung ist das System in der Lage, auch kleinste Defekte und Formabweichungen auf der nassseitigen Oberfläche der Ventilmembran zuverlässig zu erfassen.
(7) Hydroakkustisches System: Das wenigstens schalltransparente Element 152 ist als Schallübertragungseinheit so ausgebildet, dass Schallwellen durch das Element 152 hindurch in das Innere des Ventilkörpers und/oder aus dem Inneren des Ventilkörpers nach außen übertragen werden. Eine Schallquelle, die im Trockenraum angeordnet ist, ist dazu eingerichtet, Schallwellen durch das Element 152 zu senden. Die vorgenannte Sensoreinheit ist dazu eingerichtet, Schallwellen durch das Element 152 zu empfangen. Das licht- und/oder schalltransparente Element 152 weist eine mechanische Verbindung mit der Wandung des Ventilkörpers auf, die eine stabile Positionierung und eine verlustarme akustische Kopplung zwischen dem Element 152 und der Wandung des Ventilkörpers gewährleistet. Das System dient zur Erfassung von Materialeigenschaften, Defekten, Ablagerungen oder strukturellen Veränderungen der nassseitigen Oberfläche der Ventilmembran im verbauten Zustand. Die Sensoreinrichtung arbeitet vorzugsweise im Frequenzbereich von 500 kHz bis 5 MHz, um eine hohe laterale und axiale Auflösung zu erreichen. Das System verwendet eine adaptive Signalverarbeitungseinheit, die die empfangenen Schallwellen auswertet und Reflexionen, Brechungen und Dämpfungen kompensiert, um die Bildqualität zu maximieren. Die Schallquelle ist als Phased-Array-System ausgeführt, wodurch die Schallrichtung und der Fokus der ausgesandten Schallwellen elektronisch gesteuert werden können. Dadurch ist eine präzise Abtastung der nassseitigen Oberfläche der Ventilmembran in unterschiedlichen Winkeln und Tiefen möglich. Das hydroakustische System ermöglicht die kontinuierliche Überwachung der Struktur der nassseitigen Oberfläche der Ventilmembran, die Erkennung von Ablagerungen, Rissen, Wanddickenveränderungen und Korrosionserscheinungen. Die empfangenen Schallsignale werden beispielsweise von einer KI-gestützten Analyseplattform verarbeitet, um strukturelle Veränderungen zu identifizieren und zu klassifizieren. Die adaptive Steuerung des Schallfokus erlaubt die dynamische Anpassung an unterschiedliche Innengeometrien und Materialeigenschaften. Das System ist in der Lage, eine detaillierte dreidimensionale Darstellung der nassseitigen Oberfläche der Ventilmembran zu erzeugen und Defekte mit einer Auflösung im Submillimeterbereich zu erfassen.

Die Sensoreinrichtung 180 ermöglicht die gleichzeitige, sequenzielle oder einzelne Nutzung der verschiedenen Sensormodule, um eine umfassende Erfassung der Oberflächenstruktur, -topografie und -materialeigenschaften zu gewährleisten. Die Kombination aus wenigstens zwei der Module Bildsensor, konfokalem Sensor, Laser-Triangulationssensor, Kohärenztomografie-Sensor und telezentrischem Kamerasystem ermöglicht eine tiefergehende Analyse der nassseitigen Oberfläche der Ventilmembran mit einer Auflösung im Submikrometerbereich.

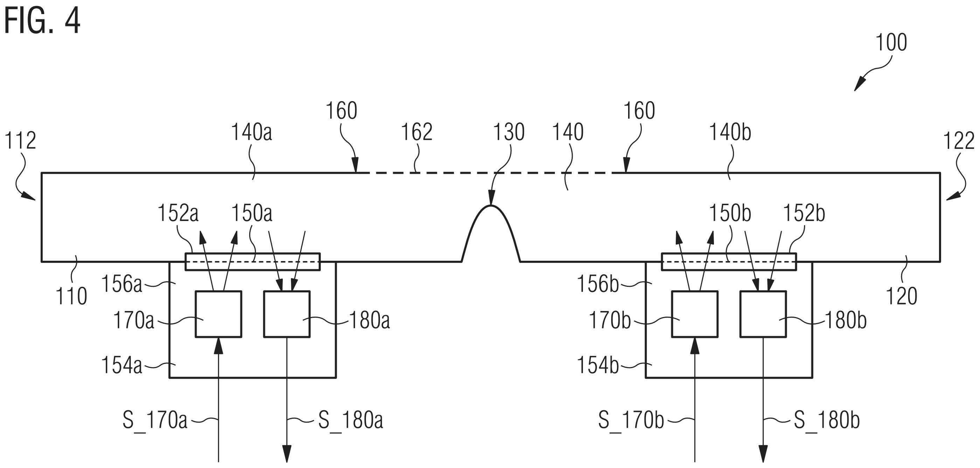

Figur 4 zeigt ein anderes Beispiel des Ventilkörpers 100 in schematischer Form. Es sind eine Mehrzahl von voneinander beabstandet angeordneten Öffnungen 150a-b, welche jeweils in den Innenraum 140 des Ventilkörpers 100 führen, vorgesehen. Die jeweilige der Öffnungen 150a-b ist durch ein zugeordnetes licht- und/oder schalltransparentes Element 152a-b verschlossen.

Eine Mehrzahl von Lichtquellen 170a-b ist vorgesehen und eingerichtet, in Reaktion auf ein jeweils insbesondere individuell zugeführtes Ansteuersignal S_170a-b Licht zu erzeugen und das von der jeweiligen Lichtquelle 170a-b erzeugte Licht durch ein jeweils unterschiedliches der Mehrzahl von licht- und/oder schalltransparenten Elementen 152a-b in den Innenraum 140 des Ventilkörpers 100 einzukoppeln.

Eine Mehrzahl von Sensoreinrichtungen 180a-b ist vorgesehen und eingerichtet, um aus dem durch das zugeordnete der licht- und/oder schalltransparenten Elemente 152a-b abtrennten Innenraum 140 einfallendes Licht zu empfangen und ein jeweiliges Sensorsignal S_180a-b zu erzeugen, welches die zumindest eine Charakteristik des durch das zugeordnete licht- und/oder schalltransparente Element 152a-b einfallenden Lichts repräsentiert und/oder zumindest eine andere Charakteristik des durch das zugeordnete licht- und/oder schalltransparente Element 152a-b einfallenden Lichts repräsentiert.

In diesem Beispiel ist gezeigt, dass der Ventilsitz 130 des Ventilkörpers 100 den Innenraum 140 in einen ersten Teil 140a und einen zweiten Teil 140b, insbesondere in den ersten und zweiten Prozessfluid-Kanal 110, 120 aufteilt, wobei eine erste der Öffnungen 150a in den ersten Teil 140a des Innenraums 140 führt, und wobei eine zweite der Öffnungen 150b in den zweiten Teil 140b des Innenraums 140 führt.

In einer Konkretisierung ist vorgesehen, dass die wenigstens eine Sensoreinrichtung 180a oder die Mehrzahl von Sensoreinrichtungen 180a-b eingerichtet ist/sind, zumindest ein digitales Bild, welches einen Zustand zumindest eines Teils des Innenraums 140 des Ventilkörpers 100 repräsentiert, als die zumindest eine Charakteristik in Form des wenigstens einen Sensorsignals S_180 oder in Form des jeweiligen der Mehrzahl von Sensorsignalen S_180a-b zu erzeugen.

Das wenigstens eine licht- und/oder schalltransparente Element 152 und die zugeordnete wenigstens eine Sensoreinrichtung 180 sind derart angeordnet, dass die Öffnung 162 im Blickfeld der wenigstens einen Sensoreinrichtung 180 liegt.

Das wenigstens eine licht- und/oder schalltransparente Element 152 und die zugeordnete wenigstens eine Sensoreinrichtung 180 sind in einem anderen nicht gezeigten Beispiel derart angeordnet, dass die Öffnung 162 nicht im Blickfeld der wenigstens einen Sensoreinrichtung 180 liegt.

Figur 5 zeigt einen Schnitt des Ventilkörpers 100 aus Figur 4, wobei aus Übersichtlichkeitsgründen nur eine der Mehrzahl von Sensoreinrichtungen 180a dargestellt ist. Ein Bereich 164 des Ventilkörpers 100, in welchem sich im Betrieb des Prozessventils 2 ein Absperrkörper 200 zu einem Öffnen und Schließen des Prozessventils 2 bewegt, liegt zumindest abschnittsweise in einem Bildfeld BF_180 der wenigstens einen oder jeweiligen Sensoreinrichtung 180. Zur Beleuchtung des Absperrkörpers im Bereich 164 wird/werden beispielsweise die wenigstens beiden oder nur eine der Lichtquellen 170a und 170b zur Lichtabstrahlung betrieben.

Eine optische Achse O_180 der wenigstens einen Sensoreinrichtung 180a-b oder der jeweiligen der Mehrzahl von Sensoreinrichtungen 180a-b verläuft sowohl durch einen Abschnitt 114, 124 eines Prozessfluidkanals 110, 120, welcher einen Prozessfluid-Anschluss 112, 122 und die Sitz-Öffnung 162 miteinander verbindet, als auch durch die Sitz-Öffnung 162.

Das licht- und/oder schalltransparente Element 150a-b ist im zugeordneten Abschnitt 114, 124 des Prozessfluidkanals 110, 120 auf einer von der Sitz-Öffnung 162 abgewandten Seite des Ventilkörpers 100 angeordnet.

Die wenigstens eine Sensoreinrichtung 180a-b ist also derart angeordnet, dass die zugeordnete optische Achse O_180 einem Verlauf des Abschnitts 114, 124 einer gedachten Mittenlängsachse des jeweiligen Abschnitts 114, 124 des Prozessfluidkanals 110, 120 folgt, worunter auch eine gezeigte Verkippung der optischen Achse O_180 zur Mittenlängsachse des jeweiligen Abschnitts 114, 124 verstanden wird. D.h. die optische Achse O_180 ist in einem vorgegebenen Winkel relativ zur Normalen der durch die Öffnung 162 und den Ventilsitz 130 vorgegebenen Öffnung des Abschnitts 114, 124 ausgerichtet.

Eine nicht gezeigte Halterung der wenigstens einen Sensoreinrichtung 180a verbindet den Ventilkörper 100 und die Sensoreinrichtung 180a und ist so gestaltet, dass die Pose der wenigstens einen Sensoreinrichtung 180a relativ zum Ventilkörper 100 derart festgelegt ist, sodass die wenigstens eine Sensoreinrichtung 180a und insbesondere deren Blickfeld auf die nassseitige Oberfläche der Ventilmembran ausgerichtet ist.

Die wenigstens eine Sensoreinrichtung 180a ist folglich derart angeordnet, dass die optische Achse O_180a der wenigstens einen Sensoreinrichtung 180a durch den Abschnitt 114 auf die nassseitige Oberfläche der Ventilmembran gerichtet ist, wobei die Orientierung der Sensoreinrichtung 180a so eingestellt ist, dass der Erfassungsbereich der wenigstens einen Sensoreinrichtung 180a zumindest einen Teil der aus dem Abschnitt 180a heraus sichtbaren nassseitigen Oberfläche 180a abdeckt.

Der jeweilige Abschnitt 114, 124 des Prozessfluidkanals 110, 120 führt in eine erste Richtung zu dem Ventilsitz 130. Der Abschnitt 114, 124 des Prozessfluidkanals 110, 120 führt in eine zweite, der ersten Richtung entgegengesetzte Richtung zu dem die wenigstens eine Öffnung 150a-b verschließenden licht- und/oder schalltransparenten Element 152a-b. In dem Trockenraum ist die wenigstens eine Sensoreinrichtung 180a-b derart angeordnet, dass beispielsweise Lichtstrahlen, welche von der nassseitigen Oberfläche der Ventilmembran durch den Abschnitt 114, 124 in Richtung des licht- und/oder schalltransparenten Elements 152 laufen, von der sensierenden Oberfläche der wenigstens einen Sensoreinrichtung 180a empfangen und in das Sensorsignal umgewandelt werden.

Die wenigstens eine Sensoreinrichtung 180a-b ist gemäß einem der zu Figur 3 erläuterten Beispiele ausgebildet.

Die in den Figuren 3 bis 5 gezeigten Anordnungen bestehen jeweils aus zumindest zwei strukturell und funktional voneinander getrennten Elementen, nämlich dem wenigstens einen licht- und/oder schalltransparenten Element 152a-b und der Öffnung 162, die durch den tunnelartigen Abschnitt, in Figur 5 mit den Bezugszeichen 114, 124 versehen, voneinander beabstandet sind. Das wenigstens eine licht- und/oder schalltransparente Element 152a-b und die Öffnung 162 sind derart positioniert, dass eine geradlinige geometrische Verbindung zwischen ihnen besteht, die als Sichtachse bezeichnet wird und durch den tunnelartigen Abschnitt verläuft.

Die Sichtachse ist eine imaginäre Linie, die die optische Verbindung zwischen dem licht- und/oder schalltransparenten Element 152a-b und der Öffnung 162 herstellt. Diese Sichtachse erstreckt sich entlang der Längsachse des tunnelartigen Abschnitts und ist beispielsweise so ausgerichtet, dass der zentrale Punkt der Scheibe mit einem außermittigen Punkt der Öffnung 162 in einer Koaxialität liegt. Die Scheibe und die Öffnung 162 befinden sich somit auf einer gemeinsamen optischen Achse, die eine direkte visuelle Durchsicht von der Scheibe durch die Öffnung 162 hindurch ermöglicht.

Der tunnelartige Abschnitt ist durch innere Wandungen begrenzt und läuft ausgehend von dem wenigstens einen licht- und/oder schalltransparenten Element 152a-b auf den Ventilsitz 130 zu.

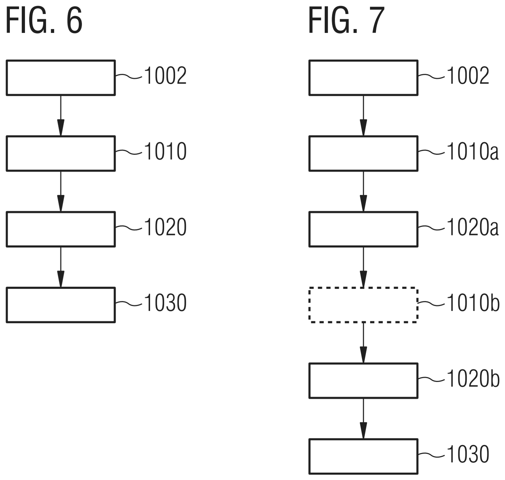

Figur 6 zeigt ein beispielhaftes Verfahren zum Betreiben des Ventilkörpers 100 bzw. des zugeordneten Prozessventils. Gemäß diesem Beispiel erfolgt ein Öffnen 1002 des Prozessventils, soweit es noch geschlossen ist, wobei der den Innenraum des Prozessventils begrenzender Absperrkörper des Prozessventils vom Ventilsitz zumindest abschnittsweise abgehoben ist.

Das Verfahren umfasst ein Betreiben 1010 der wenigstens einen Lichtquelle zur Erzeugung von Licht in Reaktion auf ein zugeführtes Ansteuersignal, wobei das von der wenigstens einen Lichtquelle erzeugte Licht durch das wenigstens eine licht- und/oder schalltransparente Element in den durch das licht- und/oder schalltransparente Element abgetrennten Innenraum des Ventilkörpers des Prozessventils eingekoppelt wird, und wobei das licht- und/oder schalltransparente Element die Öffnung, die in den Innenraum des Ventilkörpers führt, verschließt.

Es erfolgt zeitgleich zum Betreiben 1010 der wenigstens einen Lichtquelle ein Betreiben 1020 der wenigstens einen Sensoreinrichtung zur Erzeugung des Sensorsignals, welches die zumindest eine Charakteristik des durch das licht- und/oder schalltransparente und die Öffnung verschließende Element einfallenden Lichts oder eine weitere Charakteristik des durch das weitere licht- und/oder schalltransparente und eine weitere Öffnung des Ventilkörpers verschließende Element einfallenden Lichts repräsentiert.

Das von der wenigstens einen Sensoreinrichtung erzeugte Sensorsignal umfasst in einem Beispiel wenigstens das eine digitales Bild, welches zumindest einen ersten Abschnitt einer im Bildfeld der wenigstens einen Sensoreinrichtung befindlichen nassseitigen Oberfläche des Absperrkörpers repräsentiert. Das gleichzeitige Ausführen der Schritte 1010 und 1020 erlaubt eine Aufnahme des wenigstens einen digitalen Bildes während der Absperrkörper zumindest abschnittsweise vom Ventilsitz abgehoben ist.

Figur 7 zeigt ein weiteres Verfahren zum Betreiben des Ventilkörpers bzw. des zugehörigen Prozessventils. Es erfolgt ein Betreiben 1010a der wenigstens einen Lichtquelle zur Erzeugung von Licht, welches in den Innenraum des Ventilkörpers eingekoppelt wird.

Zudem erfolgt ein Betreiben 1020a, während das von der wenigstens einen Lichtquelle erzeugte Licht in den Innenraum eingestrahlt wird, der wenigstens einen Sensoreinrichtung zum Ermitteln des wenigstens einen digitalen Bildes, insbesondere während der Absperrkörper zumindest abschnittsweise vom Ventilsitz abgehoben ist, wobei die wenigstens eine Sensoreinrichtung aus dem durch das licht- und/oder schalltransparente Element abtrennten ersten Teil des Innenraums einfallendes Licht empfängt, und wobei der erste Teil und ein zweiter Teil des Innenraums durch einen Ventilsitz getrennt sind.

Zudem erfolgt ein Betreiben 1020b, während das von der wenigstens einen Lichtquelle erzeugte Licht in den Innenraum eingestrahlt wird, der weiteren Sensoreinrichtung zum Ermitteln wenigstens eines weiteren digitalen Bildes, insbesondere während der Absperrkörper zumindest abschnittsweise vom Ventilsitz abgehoben ist, wobei die weitere Sensoreinrichtung aus dem durch das licht- und/oder schalltransparente Element abtrennten zweiten Teil des Innenraums einfallendes Licht empfängt.

In einem optionalen Schritt 1010b wird eine andere Lichtquelle betrieben als die im Schritt 1010a. So wird im Schritt 1010a die Lichtquelle betrieben, die ihr Licht in den zweiten Teil einkoppelt, um Licht von der dem Ventilsitz gegenüberliegenden Seite des Innenraums 140 auf den Absperrkörper einzustrahlen, also in den ersten Teil, in dem die erste Sensorvorrichtung das Bild aufnimmt bzw. erfasst. Entsprechend wird im Schritt 1010b die Lichtquelle betrieben, die ihr Licht in den ersten Teil einkoppelt, so dass die weitere, zweite Sensoreinrichtung im zweiten Teil von dort aus das Bild erfasst.

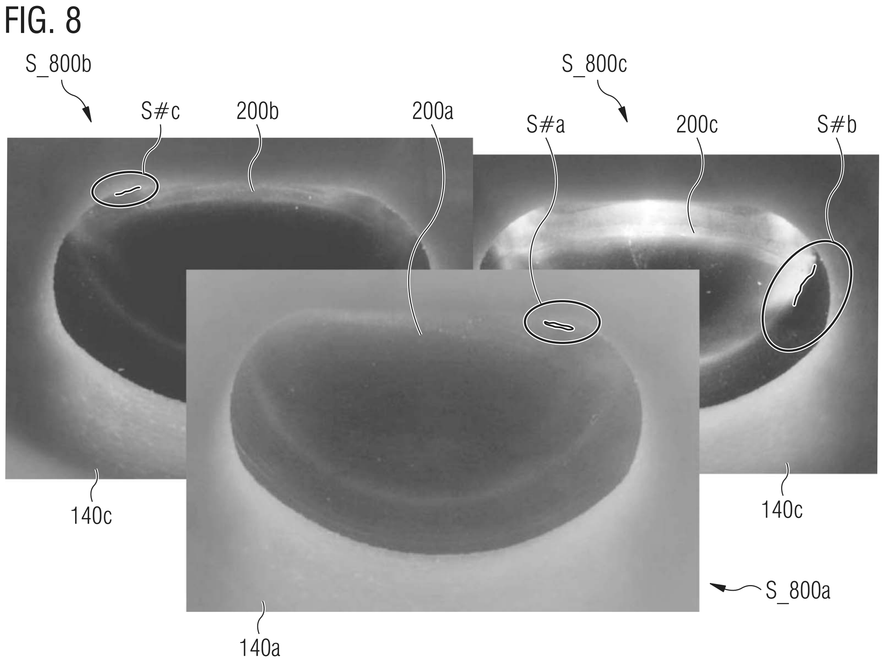

Figur 8 zeigt beispielhaft die digitalen Bilder gemäß dem jeweiligen Sensorsignal S_180a-c bzw. einen Ausschnitt aus dem jeweiligen Bild, die gemäß dem Verfahren nach den Figuren 6 oder 7 bzw. mit dem Ventilkörper aus den Figuren 4 oder 5 erzeugt wurden. Hierbei wurde über den ersten Teil des Innenraums des Ventilkörpers von der Sensoreinrichtung ein Bild erfasst und über den zweiten Teil die Beleuchtung des Absperrkörpers 200a-c, vorliegend einer Ventilmembran, bereitgestellt.

Gemäß dem Bild des Sensorsignals S_800a ist optisch ein Schadensbild S#a erkennbar, welches einen oberflächlichen Riss im Dichtbereich oder in der Nähe des Dichtbereichs des Absperrkörpers 200a umfasst.

Gemäß dem Bild des Sensorsignals S_800b ist optisch ein Schadensbild S#b erkennbar, welches ebenfalls einen oberflächlichen Riss in der Nähe des Dichtbereichs des Absperrkörpers 200b umfasst. Im Vergleich mit dem Schadensbild S#a befindet sich der Riss an einer anderen Stelle.

Gemäß dem Bild des Sensorsignals S_800c ist optisch ein Schadensbild S#c erkennbar, welches eine Beschädigung im Bereich des Walkbereichs erkennen lässt.

Die beispielhaft gezeigten Schadensbilder können durch einen Menschen begutachtet werden, dem die Bilder bereitgestellt werden. Zusätzlich oder alternativ werden die Schadensbilder durch eine maschinen-trainierte Funktion in Fehlerklassen wie beispielsweise 'kein Oberflächendefekt', 'schwerwiegender Oberflächendefekt im Sitzbereich', 'leichter Oberflächendefekt im Sitzbereich' eingeteilt.

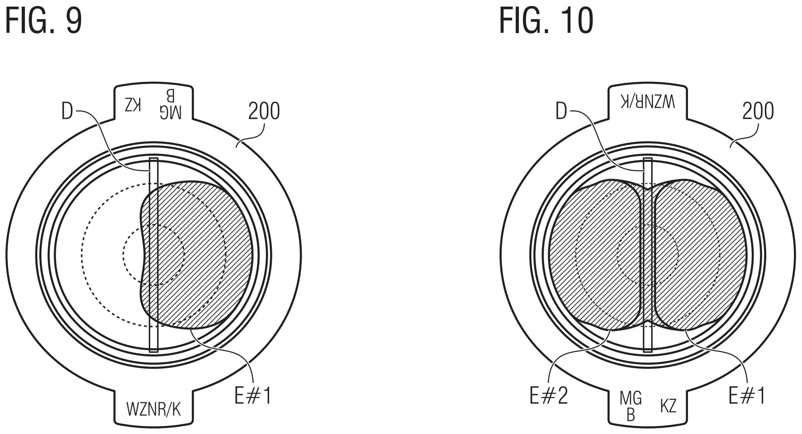

Figuren 9 und 10 illustrieren den Erfassungsbereich der Sensoreinrichtungen aus den Figuren 3 bis 8 bzw. deren Beschreibung. Beide Figuren zeigen die Draufsicht auf eine Nassseite des als Ventilmembran ausgebildeten Absperrkörpers 200. Figur 9 zeigt einen Erfassungsbereich E#1 auf der nassseitigen Oberfläche Membran, welcher beispielsweise durch ein Bild, welches von einer einzigen Sensoreinrichtung aus der Figur 5 erzeugt wird, erfasst wird. Zudem muss die Ventilmembran in ihrem geöffneten Zustand sein. Vorteilhaft wird ein Dichtabschnitt D, welcher in geschlossenem Zustand auf den Ventilsitz drückt, zu einem großen Teil erfasst.

Figur 10 zeigt zwei Erfassungsbereiche E#1 und E#2 der nassseitigen Oberfläche der Ventilmembran bzw. des Absperrkörpers 200, die jeweils als Bildteil eines digitalen bzw. digital erzeugten Bildes, welches jeweils aus verschiedenen Teilen des Innenraums von einer jeweiligen der Sensoreinrichtungen aufgenommen wurde, erfasst werden. Die Erfassungsbereiche E#1 und E#2 überschneiden sich im Bereich des Dichtabschnitts D.

Die Erfassungsbereiche E#1 und E#2 können mittels der beiden zugehörigen Bilder fusioniert werden, um ein gemeinsames Bild der nassseitigen Oberfläche der Ventilmembran zu generieren. Die Bilder, die die Erfassungsbereiche E#1 bzw. E#2 umfassen, können aber auch getrennt voneinander maschinell oder durch einen Menschen klassifiziert werden.

Die gezeigten Erfassungsbereiche sind nur beispielhaft und nicht auf den gezeigten Bereich beschränkt. Man kann den Bereich auch vergrößern und die Membrane komplett erfassen je nach Kamerawinkel und Größe des Fensters.

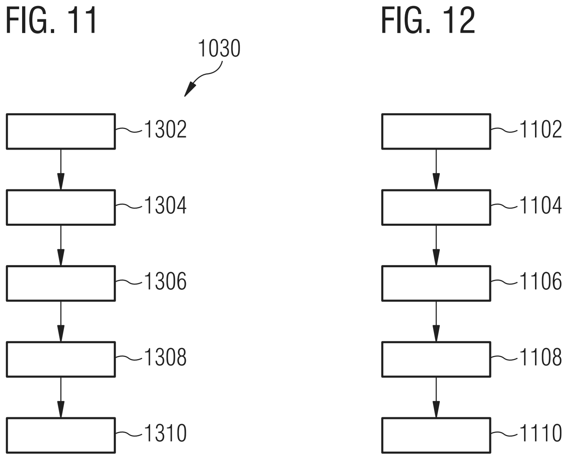

Figur 11 zeigt ein schematisches Ablaufdiagramm, welches den Schritt 1030 aus den Figuren 6 und 7 beispielhaft näher spezifiziert. In dieser Weiterbildung des Verfahrens gemäß einem Schritt 1030 wird in einem Schritt 1302 das digitale Bild, welches in Form des wenigstens einen Sensorsignals von der wenigstens einen Sensoreinrichtung bereitgestellt wird, vorverarbeitet und der Bereich, der den Absperrkörper bzw. dessen Oberfläche zeigt, wird einer Schadenserkennung zugeführt.

Das erfasste Bild wird im Schritt 1302 folglich der Vorverarbeitung unterzogen, die Schritte wie beispielsweise eine Rauschunterdrückung, eine Kontrastanpassung, eine Farbkorrektur und/oder eine Schärfung umfasst, um die Bildqualität zu optimieren und Störeinflüsse zu minimieren.

Mithilfe wenigstens eines Verfahrens zur Bildsegmentierung wird im Schritt 1304 derjenige Bereich im digitalen Bild identifiziert, der die zu analysierende Oberfläche des Absperrkörpers bzw. der Ventilmembran umfasst. Optional wird vorab eine Kalibrierung der Kamera bzw. des Bildfeldes der Kamera durchgeführt, um den relevanten Bereich, z. B. durch geometrische Transformationen, exakt zu lokalisieren und auszurichten.

Das segmentierte Bild wird im Schritt 1306 hinsichtlich charakteristischer Merkmale, wie Rissmuster, Farbabweichungen, Texturunregelmäßigkeiten, mittels eines Verfahrens analysiert. Mittels Bildverarbeitungsmethoden, z. B. Kanten- oder Konturenerkennung, und/oder fortgeschrittener Verfahren wie Deep Learning, z. B. Convolutional Neural Networks, CNN, werden Anomalien wie die beispielhaft genannten Rissmuster erkannt, die auf sichtbare Schäden des Absperrkörpers bzw. der Membran hindeuten.

Ein erkannter Schaden bzw. eine im Schritt 1306 erkannte Anomalie wird anschließend in einem Schritt 1308 kategorisiert, z. B. Riss, Falte, Korrosion, Ausstülpung, und hinsichtlich ihrer Ausprägung bewertet. Hierbei können Schwellenwerte, statistische Modelle oder neuronale Netzwerke zur Klassifikation herangezogen werden.

Die wenigstens eine im Schritt 1308 kategorisierte Anomalie wird in einem nachfolgenden Schritt 1310 in dem digitalen Bild markiert. Das analysierte Bild wird also beispielsweise mit markierten Schadensbereichen ausgegeben, wobei die Art und Intensität des Schadens hervorgehoben und/oder lesbar textuell und/oder maschinenlesbar bereitgestellt wird.

In einem anderen Beispiel des Schritts 1310 wird ein automatisierter Bericht generiert, der die festgestellten Schäden, deren Lage, Größe und Schweregrad dokumentiert.

Das System kann in einer Ausprägung eine Rückkopplungsschleife enthalten, in der der Prozessverantwortliche oder das Wartungspersonal das Ergebnis des Schritts 1310 validiert, um daraus Trainingsdaten zu generieren, und um das Modell damit fortlaufend zu verbessern, z. B. durch Reinforcement Learning oder kontinuierliches Training.

Figur 12 zeigt ein schematisches Ablaufdiagramm eines Verfahrens. Mit Hilfe dieses Verfahrens kann festgestellt und überwacht werden, ob das Prozessventil sicher schließt, also ob der Absperrkörper sicher auf den zugeordneten Ventilsitz auffährt und damit das Prozessventil in eine geschlossene Position zum Sperren eines Flusses von Prozessfluid überführt.

Es erfolgt ein geplantes Schließen 1102 des Prozessventils, wobei ein Absperrkörper des Prozessventils auf einen Ventilsitz auffährt und den Innenraum des Prozessventils in einen ersten Teil des Innenraums und einen zweiten Teil des Innenraums teilt.

Ist das Prozessventil in der erwarteten geschlossenen Position, so erfolgt ein Betreiben 1104 der wenigstens einen Lichtquelle zur Erzeugung von Licht in einem Zeitraum nach dem Schließen des Prozessventils, wobei die wenigstens eine Lichtquelle ihr Licht über eine licht- und/oder schalltransparente Scheibe, welche einen zweiten Teil des Innenraums begrenzt, in den zweiten Teil des Innenraums einstrahlt.

Während Licht in den ersten Teil des Innenraums eingekoppelt wird erfolgt ein Betreiben 1106 der wenigstens einen Sensoreinrichtung zur Erzeugung des Sensorsignals, welches wenigstens eine Lichtintensität als Charakteristik des Lichts, welches durch die licht- und/oder schalltransparente Scheibe aus dem ersten Teil des Innenraums einfällt und von der Sensoreinrichtung empfangen wird, repräsentiert. Es kann auch ein digitales Bild erfasst und ausgewertet werden. Es wird also die wenigstens eine Sensoreinrichtung zeitlich nach dem Schließen des Prozessventils und während des Betreibens der wenigstens einen Lichtquelle zum Einstrahlen von Licht in den zweiten Teil des Innenraums betrieben.

In Abhängigkeit von dem Sensorsignal, wenigstens der Lichtintensität erfolgt ein Ermitteln 1108 einer Schließqualität des Prozessventils.

Es ist vorgesehen, dass eine hohe Schließqualität ermittelt wird, wenn eine niedrige Lichtintensität festgestellt wird, und dass eine niedrige Schließqualität ermittelt wird, wenn eine hohe Lichtintensität oberhalb der niedrigen Lichtintensität, also oberhalb eines Grenzwerts festgestellt wird. Dabei wird davon ausgegangen, dass im Normalzustand kein Licht in den Innenraum des Ventilkörpers einfällt.

Wird eine hohe Lichtintensität, insbesondere im Dichtbereich des Absperrkörpers bzw. im Bereich des Ventilsitzes, festgestellt, so indiziert dies bei gewünscht geschlossenem Prozessventil, dass das Licht der Lichtquelle aus dem zweiten Teil in den ersten Teil gelangt. Das kann unterschiedliche Gründe haben. Entweder funktioniert der Antrieb nicht. Es kann aber auch eine Beschädigung des Absperrmittels oder des Ventilsitzes vorliegen, wodurch eine Öffnung zwischen Ventilsitz und Absperrmittel entsteht, durch die das Licht der Lichtquelle aus dem zweiten Teil des Innenraums in den ersten Teil des Innenraums dringt. Daneben kann auch ein Störkörper in dem Prozessventil dafür sorgen, dass ein Schließvorgang nicht oder nicht komplett durchgeführt werden kann.

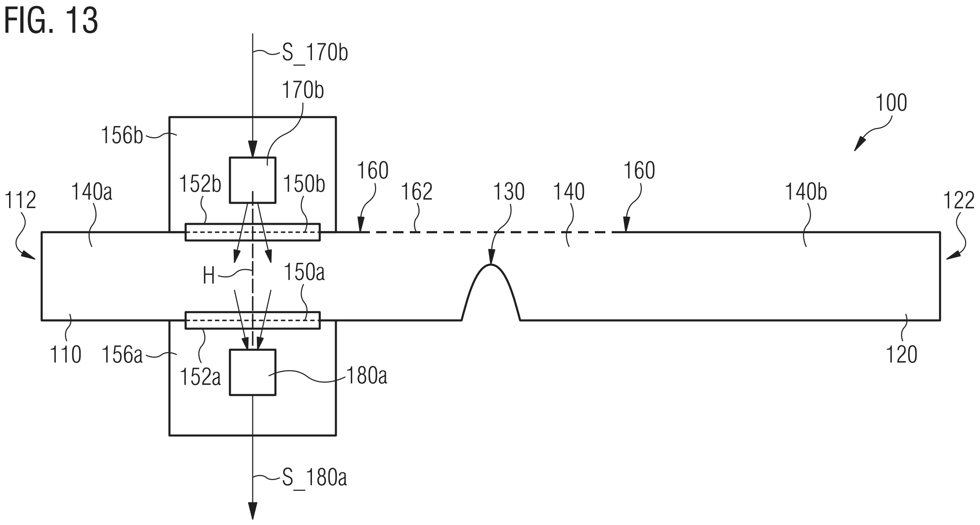

Figur 13 zeigt ein weiteres Beispiel des Ventilkörpers 100 in schematischer Form zur Trübungsmessung des gestellten Prozessfluids. Die zumindest eine Lichtquelle 170b ist gemeinsam mit einem ersten zugeordneten der Mehrzahl von licht- und/oder schalltransparenten Elementen 152b dazu eingerichtet, insbesondere monochromatisches Licht in Form einer insbesondere kollimierten Lichtverteilung entlang einer Hauptabstrahlrichtung H in den Innenraum 140 des Ventilkörpers 100 einzukoppeln.

Die wenigstens eine Sensoreinrichtung 180a ist gemeinsam mit einem zweiten zugeordneten licht- und/oder schalltransparenten Element 152a dazu eingerichtet, zumindest eine Lichtintensität von durch Schwebeteilchen in dem Prozessfluid gestreutem Licht der entlang der Hauptabstrahlrichtung H kollimierten Lichtverteilung zu erfassen.

Gemäß dem in Figur 13 gezeigten Beispiel sind die zumindest eine Lichtquelle 170b und die zumindest eine Sensoreinrichtung 180a auf gegenüberliegenden Seiten des ersten Prozessfluidkanals 110, der durch den Ventilsitz 130 von dem zweiten Prozessfluidkanal 120 getrennt ist, angeordnet. Alternativ oder zusätzlich kann die Sensoreinrichtung 180a auch in einem anderen Winkelverhältnis zur Hauptabstrahlrichtung H angeordnet sein.

Die wenigstens eine Sensoreinrichtung 180a ist bevorzugt so ausgerichtet, dass die Hauptabstrahlrichtung H durch ihr Sichtfeld verläuft.

Die Trübung wird in Nephelometrischen Trübungseinheiten, NTU, angegeben. Dabei bezieht sich NTU auf die Intensität des bei einem Winkel von 90° gestreuten Lichts, gemessen relativ zu einer standardisierten Referenz.

So wird die Intensität durch die Sensoreinrichtung 180a beispielsweise in Watt pro Quadratmeter, W/m², ermittelt.

Durch eine vorab durchgeführte Kalibrierung mit einer standardisierten Referenzlösung wird das durch die Sensoreinrichtung ermittelte Sensorsignal auf einen Referenzwert bezogen. Dabei wird festgelegt, dass die Lichtstreuintensität der Referenzlösung einem Wert von 1 NTU entspricht.

Als Referenzlösung wird eine sogenannte Formazin-Lösung verwendet. Diese Suspension weist eine reproduzierbare Partikelgrößenverteilung und -konzentration auf. Diese Eigenschaften sorgen dafür, dass die optischen Streueigenschaften - und damit die gemessene Trübung - stabil und später durch Messungen vergleichbar sind.

Die NTU-Werte ergeben sich jeweils als dimensionsloser, relativer Wert, der den Vergleich mit der Referenzlösung ermöglicht. Das heißt, 1 NTU entspricht per Definition der optischen Streuung, die durch die standardisierte Formazinlösung erzeugt wird.

Die Trübung TR des Prozessfluids, welches im Ventilbetrieb durch den Innenraum 140 des Ventilkörpers 100 fliest, ergibt sich beispielsweise wie folgt: $TR = \frac{{I}_{Probe} - {I}_{Blank}}{{I}_{Formazin} - {I}_{Blank}} \times {T}_{Formazin}$ wobei:
I_Probe: Die von der Sensoreinrichtung gemessene Lichtintensität bei der Probe, also während des Messvorgangs mit dem an dem licht- und/oder schalltransparenten Element vorbeifließenden Prozessfluid.
I_Blank: Die Lichtintensität, die als ein Blanksignal im Rahmen der Kalibrierung, beispielsweise mit trübungsfreiem Wasser ermittelt wurde.
I_Formazin: Die Lichtintensität, die bei der Messung der standardisierten Formazinlösung im Rahmen der Kalibrierung ermittelt wurde.
T_Formazin: Der Nennwert der verwendeten Formazinstandardlösung in NTU. Beispielsweise wird hierfür 1 NTU zugrunde gelegt.

Die Normierung stellt sicher, dass das von der wenigstens einen Sensoreinrichtung 180a ermittelte Lichtintensitätssignal in einen normierten, dimensionslosen Wert, also NTU, umgerechnet wird, der eine Vergleichbarkeit verschiedener Messergebnisse ermöglicht.

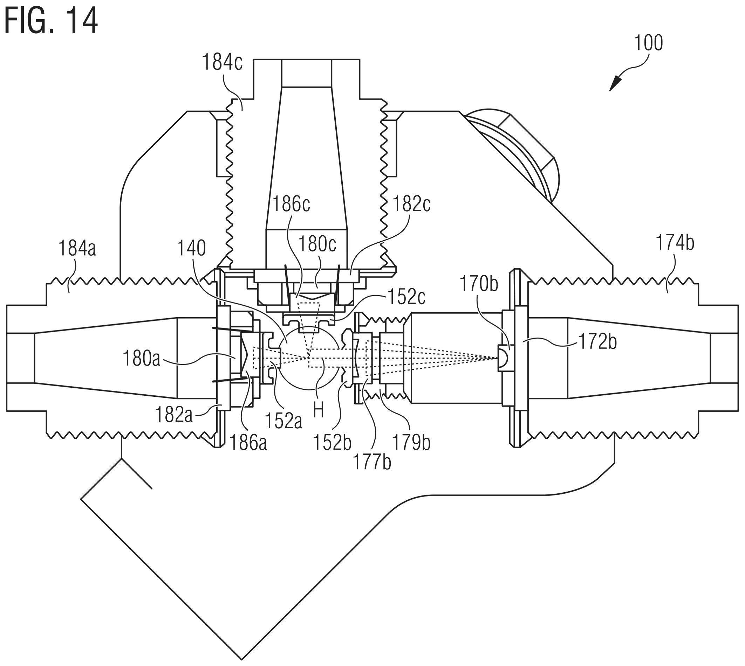

Figur 14 zeigt einem Schnitt ein weiteres Beispiel des Ventilkörpers 100 als Ausprägung des in Figur 13 schematisch dargestellten Ventilkörpers 100. Die wenigstens eine Lichtquelle 170b ist vorliegend als auf einer Platine 172b angeordnete Halbleiterlichtquelle ausgebildet. Die Platine 172b ist mittels einer Einschraubhülse 174b zu dem Ventilkörper 100 festgelegt, wobei die Einschraubhülse 174b mit ihrem Außengewinde in ein Innengewinde des Ventilkörpers 100 eingreift und äußere Abschnitte der Platine 172b auf einen Gegenlagerabschnitt des Ventilkörpers 100 drückt.

Das licht- und/oder schalltransparente Element 152b umfasst einen erhabenen Abschnitt, welcher durch eine Verjüngung der zugeordneten Öffnung im Ventilkörper 100 geführt ist. die Verjüngung ist beispielsweise mittels einer Presspassung in die zugeordnete Öffnung des Ventilkörpers, die in den Innenraum des Ventilkörper 100 führt, eingesetzt.

Vorliegend ist zwischen dem licht- und/oder schalltransparenten Element 152b und dem Befestigungsmittel 179b eine Kollimationsoptik 177b angeordnet, um die Primärlichtverteilung, welche von der wenigstens einen Lichtquelle 170b abgestrahlt wird, in eine kollimierte Sekundärlichtverteilung, welche in den Innenraum 140 des Ventilkörpers 100 eingestrahlt wird, zu verwandeln. Die Kollimationsoptik 177b ist als kollimierende Linse ausgeführt.

Die Kollimationsoptik 177b ist mittels einer Befestigungskraft auf ein Gegenlager, vorliegend auf das licht- und/oder schalltransparente Element 152b, gedrückt und so festgelegt. Die Befestigungskraft wird durch ein in den Ventilkörper 100 eingeschraubtes Befestigungsmittel 179b, welches beispielsweise als Befestigungsring ausgebildet ist, aufgebracht.

Die Sensoreinrichtung 180a-c ist vorliegend als auf einer Platine 182a-c angeordneter Lichtsensor ausgebildet. Die Platine 182a-c ist mittels einer Einschraubhülse 184a-c zu dem Ventilkörper 100 festgelegt, wobei die Einschraubhülse 184a-c mit ihrem Außengewinde in ein Innengewinde des Ventilkörpers 100 eingreift und äußere bzw. laterale Abschnitte der Platine 182a-c bzw. auf der Platine 182a-c befindliche Aufbauten auf einen Gegenlagerabschnitt des Ventilkörpers 100 drückt.

Zwischen der Sensoreinrichtung 180a-c und dem zugeordneten licht- und/oder schalltransparenten Element 152a-c, das die Öffnung, die in den Innenraum 140 des Ventilkörpers 100 führt, ist eine Vorsatzoptik 186a, 186c angeordnet, welche das durch das licht- und/oder schalltransparente Element 152a-c eintreffende Licht so umformt, wie es gemäß einer gewünschten Abbildung auf die zugeordnete Sensoreinrichtung 180a-c zu treffen hat.

Die Sensoreinrichtung 180a ist auf der der Hauptabstrahlrichtung H zugehörigen Achse angeordnet und blickt damit direkt in das Licht, welches von der wenigstens einen Lichtquelle 170b abgestrahlt wird.

Die Sensoreinrichtung 180c ist mit ihrer Hauptblickrichtung um 90° zu der der Hauptabstrahlrichtung H zugehörigen Achse angeordnet und blickt damit nicht direkt auf das Licht, welches von der Lichtquelle 170b abgestrahlt wird. Vielmehr fließt das zu messende Medium im Innenraum 140 lotrecht zur Zeichenebene.

Das licht- und/oder schalltransparente Element 152a-c umfasst den erhabenen Abschnitt, welcher durch eine Verjüngung der zugeordneten Öffnung im Ventilkörper 100 geführt ist. Die Verjüngung ist beispielsweise mittels einer Presspassung in die zugeordnete Öffnung des Ventilkörpers, die in den Innenraum 140 des Ventilkörper 100 führt, eingesetzt. Selbstverständlich sind auch andere Befestigungsmöglichkeiten des licht- und/oder schalltransparenten Elements 152a-c in der zugeordneten Öffnung des Ventilkörpers 100 denkbar.

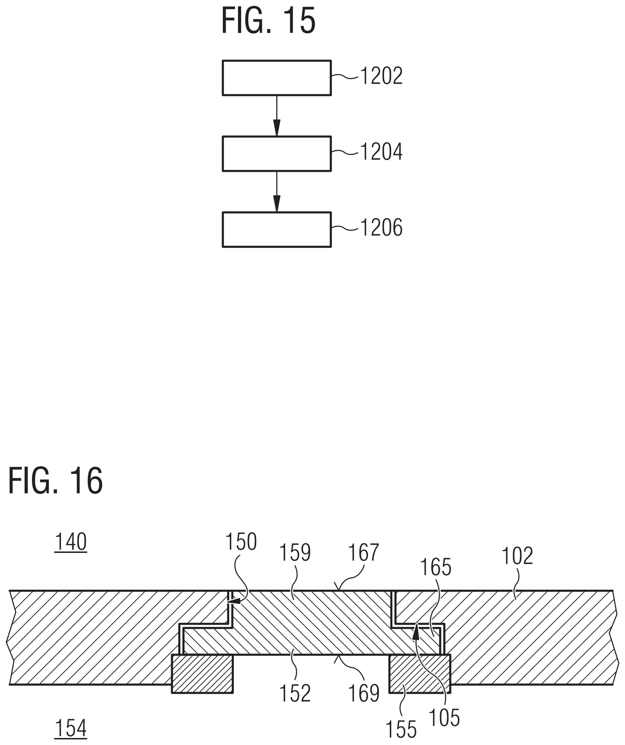

Figur 15 zeigt ein schematisches Ablaufdiagramm, bei dem die Trübung des Prozessfluids ermittelt wird und damit überwacht werden kann. Hierzu erfolgt zunächst ein Ermitteln 1202 zumindest eines ersten Trübungs-Wertes des durch den Innenraum des Ventilkörpers bei geöffnetem Prozessventil fließenden Prozessfluids in Abhängigkeit von dem zu einem ersten Zeitpunkt erzeugten Sensorsignal der wenigstens einen Sensoreinrichtung. Ein Ermitteln 1204 zumindest eines zweiten Trübungs-Wertes des durch den Innenraum des Ventilkörpers bei geöffnetem Prozessventil fließenden Prozessfluids erfolgt in Abhängigkeit von dem zu einem zeitlich nach dem ersten Zeitpunkt liegenden zweiten Zeitpunkt erzeugten Sensorsignals der wenigstens einen Sensoreinrichtung.

Insbesondere erfolgt zu dem ersten Zeitpunkt die Ermittlung eines ersten Streulicht-Trübungswertes mittels der Sensoreinrichtung 180c gemäß Figur 14 und eines ersten Streulicht-Trübungswertes mittels der Sensoreinrichtung 180a gemäß Figur 14. Es erfolgt zu dem zweiten Zeitpunkt die Ermittlung eines zweiten Streulicht-Trübungswertes mittels der Sensoreinrichtung 180c gemäß Figur 14 und eines zweiten Streulicht-Trübungswertes mittels der Sensoreinrichtung 180a gemäß Figur 14. Es sind zwei Messverfahren (Streulicht und Durchlicht) in einem Auswerteverfahren kombiniert und ermöglichen damit die Messungen hoher und geringer Trübungen in einem.

Mit der Messung können vorteilhaft Phasenübergänge zwischen verschiedenen Medien genau detektiert werden. Damit kann auch das Prozessventil entsprechend genau angesteuert werden, um gezielt einen Fluss eines Prozessmediums zu steuern.

Ein Öffnen oder Schließen 1206 des Prozessventils erfolgt deshalb in Abhängigkeit von dem wenigstens einen ersten Trübungswert und in Abhängigkeit von dem wenigstens einen zweiten Trübungswert, insbesondere sobald ein Unterschied zwischen dem ersten Trübungs-Wert und dem zweiten Trübungs-Wert zumindest eine vorab festgelegte oder variable Zeitdauer lang einen Grenzwert überschreitet.

Wird beispielsweise in einem Hauptkanal eines Ventilblocks ein Phasenübergang von einem Prozessmedium zum anderen erkannt, so kann ein Ventilbereich gezielt geöffnet werden, um beispielsweise Spülmedium aus einem Tank in den Hauptkanal zu leiten.

Wird in einem anderen Beispiel ein anderer Phasenübergang von einem Prozessmedium zum anderen erkannt, so kann der zugeordnete Ventilbereich gezielt geschlossen werden, um beispielsweise Verunreinigungen durch das nachfolgende Spülmedium zu verhindern.

Figur 16 zeigt in einem schematischen Schnitt ein weiteres Beispiel der Anordnung des licht- und/oder schalltransparenten Elements 152 in der zugeordneten Öffnung 150 der Wandung 102 des Ventilkörpers 100.

Das licht- und/oder schalltransparente Element 152 trennt den zu einer Führung von Prozessfluid ausgebildeten Innenraum 140 des Ventilkörpers 100 von dem Trockenraum 154 des Ventilkörpers 100 ab. Die Wandung 102 des Ventilkörpers 100 ist beispielsweise aus Edelstahl oder einem nicht lichttransparenten Kunststoff gefertigt, womit das licht- und/oder schalltransparente Element 152 es erlaubt, dass Licht aus dem Trockenraum 154 in den Innenraum 140 eintritt und aus dem Innenraum 140 in den Trockenraum 154 austritt.

Ein Befestigungselement 155, welches ringförmig ausgebildet ist, greift mit seinem Außengewinde in ein Innengewinde der Wandung 102 ein und übt eine Befestigungskraft auf einen lateralen Außenbund 165 des licht- und/oder schalltransparenten Elements 152 aus. Der laterale Außenbund 165 wird also von dem Befestigungselement 155 an einen Gegenlagerabschnitt 105 der Wandung 102 gedrückt und legt damit das licht- und/oder schalltransparente Element 152 zur Wandung 102 fest.

Die zum Innenraum 140 gewandte Oberfläche 167 des Elements 152 und eine vom Innenraum 140 abgewandte, also dem Trockenraum 154 zugewandte Oberfläche 169 sind planparallel zueinander, insbesondere um optische Einflüsse, insbesondere ungewollte Lichtbrechungen, auf Licht, welches das licht- und/oder schalltransparente Element 152 passiert, zu minimieren.

Der erhabene Abschnitt 159 des licht- und/oder schalltransparenten Elements 152 ist in einem Bereich der Öffnung 150 angeordnet, welche gegenüber einem in Richtung Trockenraum 154 angeordneten Abschnitt der Öffnung 150, verjüngt ist.

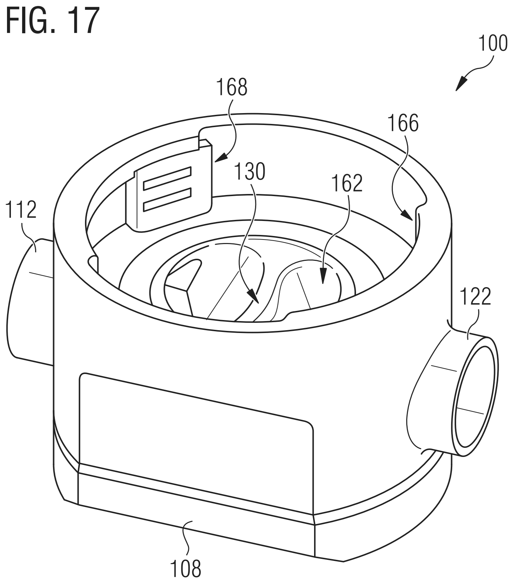

Figur 17 zeigt ein Beispiel des Ventilkörpers 100 in perspektivischer Ansicht. Auf der Seite der Sitz-Öffnung 162, welche zum Ventilsitz 130 führt, ist eine Schnittstelle 166 zum Anschluss eines Antriebs oder eines Zwischenkörpers vorgesehen. Die Schnittstelle 166 weist mechanische Befestigungselemente auf, vorliegend bajonettartige Bahnen, in welche ein Gegenstück eines Antriebs oder Zwischenkörpers eingreift.

Die Schnittstelle 166 umfasst eine elektrische Schnittstelle 168, welche eine elektrisch leitende Verbindung zu der wenigstens einen Sensoreinrichtung und/oder zu der wenigstens einen Lichtquelle bereitstellt. Beispielsweise ist die Schnittstelle, vorliegend durch vier Kontakte repräsentiert, welche eine kombinierte Schnittstelle zur Übertragung von Strom und Steuer- bzw. Mess-Daten bereitstellt. In der Darstellung sind nur zwei der vier Kontakte sichtbar, da die andere zwei um 180° versetzt angeordnet sind. Zwei Kontakte sind für die Stromversorgung und die anderen zwei Kontakte sind für die Kommunikation vorgesehen.

Die wenigstens eine Sensoreinrichtung und/oder die wenigstens eine Lichtquelle sind in dem Trockenraum des Ventilkörpers 100 angeordnet, der mit einem Deckel 108 verschlossen ist. Gemäß den vorigen Beispielen ist der Deckel 108 Teil der Wandung 156 bspw. aus der Figur 1.

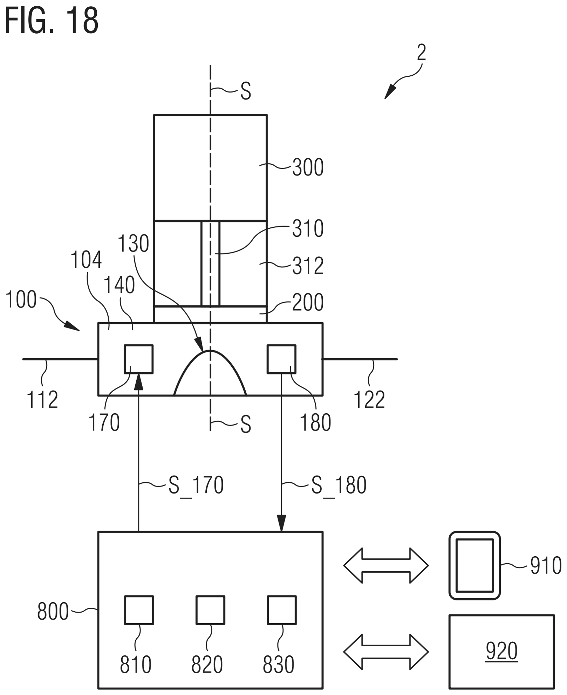

Figur 18 zeigt in schematischer Form das Prozessventil 2 zum Stellen und/oder Regeln eines Flusses von Prozessfluid, welches bei geöffneten Prozessventil 2 zwischen den Prozessfluid-Anschlüssen 112, 122 durch den Innenraum 140 des Ventilkörpers 100 fließt. Wird der Absperrkörper 200 auf den Ventilsitz 130 gedrückt, wird der Fluss des Prozessfluids unterbrochen.

Der Antrieb 300 ist entweder direkt mit dem Ventilkörper 100 verbunden oder über einen Zwischenkörper 312 mit dem Ventilkörper 100 verbunden.

Der Absperrkörper 200 ist beispielsweise eine Ventilmembran, ein Plug Diaphragm oder ein anders gearteter Absperrkörper. Der Absperrkörper drückt in einer geschlossenen Position des Prozessventils 2 auf den Ventilsitz 130 und blockiert einen Fluidfluss durch das Prozessventil 2. In einer geöffneten Position des Prozessventils 2 hebt der Absperrkörper 200 vom Ventilsitz 130 ab und erlaubt den Fluidfluss durch das Prozessventil 2.

Der Antrieb 300 ist zum Bewegen einer Ventilstange 310 ausgebildet und ist ein elektrisch, pneumatisch, fluidisch oder manuell angetriebener Antrieb 300. Die Ventilstange 310 ist entlang einer Stellachse S bewegbar gelagert und der Antrieb 300 bewegt den Absperrkörper 200 mittels der Ventilstange 310.

Zudem ist eine Steuereinheit 800 gezeigt, welche wenigstens einen Prozessor 810, wenigstens eine Speichereinheit 820, und wenigstens eine Kommunikationsschnittstelle 830 umfasst. Die in dieser Beschreibung offenbarten Verfahren werden als Computerprogrammcode auf der wenigstens einen nichtflüchtigen Speichereinheit 820 abgespeichert und sind auf dem wenigstens einen Prozessor 810 ausführbar.

Die Kommunikationsschnittstelle 830 ist dazu eingerichtet, insbesondere in Richtung eines mobilen Endgeräts 910 und/oder in Richtung einer Prozesssteuerung 920, das wenigstens eine Sensorsignals S_180 und/oder wenigstens einen daraus abgeleiteten Parameter zu übermitteln.

In einem Beispiel ist die Steuereinheit 800 in das Prozessventil 2 integriert und führt einen Teil oder alle der beschriebenen Verfahrensschritte durch.

In einem weiteren Beispiel empfängt die Steuereinheit 800 Befehle von dem mobilen Endgerät 910 oder der Prozesssteuerung 920 mittels der Kommunikationsschnittstelle 830 und steuert den Antrieb 300 entsprechend den empfangenen Befehlen, aus.

Die Steuereinheit 800 führt die in dieser Beschreibung durchgeführten Verfahren selbstständig oder nach Aktivierung durch eine übergeordnete Einheit, also durch die Prozesssteuerung 920 oder das mobile Endgerät 910, aus.

## Patentansprüche

1. Ein Ventilkörper (100) für ein Prozessventil (2), wobei der Ventilkörper (100) umfasst:
wenigstens zwei Prozessfluid-Kanäle (110, 120), welche zu zumindest einem Ventilsitz (130) des Ventilkörpers (100) führen und zumindest abschnittsweise gemeinsam mit dem Ventilsitz (130) einen Innenraum (140) des Ventilkörpers (100) begrenzen; und
wenigstens eine beabstandet von dem Ventilsitz (130) angeordnete Öffnung (150), welche in einen der wenigstens zwei Prozessfluid-Kanäle (110, 120) des Innenraums (140) des Ventilkörpers (100) führt, und welche durch ein licht- und/oder
schalltransparentes Element (152), dessen dem einen der wenigstens zwei Prozessfluid-Kanäle (110, 120) zugewandte Oberfläche abschnittsweise eine den einen der wenigstens zwei Prozessfluid-Kanäle (110, 120) begrenzende Innenwandung bildet, verschlossen ist.

2. Der Ventilkörper (100) gemäß dem Anspruch 1, wobei der Ventilkörper (100) umfasst:
wenigstens eine Lichtquelle (170), welche eingerichtet ist, in Reaktion auf ein zugeführtes Ansteuersignal (S_170) Licht zu erzeugen und das von der wenigstens einen Lichtquelle (170) erzeugte Licht durch das licht- und/oder schalltransparente Element (152) in den durch das licht- und/oder schalltransparente Element (152) abgetrennten Innenraum (140) des Ventilkörpers (100) einzukoppeln.

3. Der Ventilkörper (100) gemäß dem Anspruch 1, wobei der Ventilkörper (100) umfasst:
wenigstens eine Schallquelle, welche eingerichtet ist, in Reaktion auf ein zugeführtes Ansteuersignal Schall zu erzeugen und den von den wenigstens einen Schallquelle erzeugten Schall durch das schalltransparente Element (152) in den durch das schalltransparente Element (152) abgetrennten Innenraum (140) des Ventilkörpers (100) einzukoppeln.

4. Der Ventilkörper (100) gemäß einem der vorigen Ansprüche, wobei der Ventilkörper (100) umfasst:
wenigstens eine Sensoreinrichtung (180), welche eingerichtet ist, aus dem durch das wenigstens eine licht- und/oder schalltransparente Element (152) abtrennten Innenraum (140) einfallendes Licht und/oder einfallenden Schall zu empfangen und ein Sensorsignal (S_180) zu erzeugen, welches zumindest eine Charakteristik des durch das licht- und/oder schalltransparente Element (152) einfallenden Lichts und/oder einfallenden Schalls repräsentiert.

5. Der Ventilkörper (100) gemäß einem der vorigen Ansprüche, wobei der Ventilkörper (100) umfasst:
eine Mehrzahl von voneinander beabstandet angeordneten Öffnungen (150a-b), welche jeweils in den Innenraum (140) des Ventilkörpers (100) führen, wobei die jeweilige der Öffnungen (150a-b) durch ein zugeordnetes licht- und/oder schalltransparentes Element (152a-b) verschlossen ist.

6. Der Ventilkörper (100) gemäß dem Anspruch 5, wobei der Ventilsitz (130) des Ventilkörpers (100) den Innenraum (140) in einen ersten Teil (140a) und einen zweiten Teil (140b), insbesondere in den ersten und zweiten Prozessfluid-Kanal (110, 120) aufteilt, wobei eine erste der Öffnungen (150a) in den ersten Teil (140a) des Innenraums (140) führt, und wobei eine zweite der Öffnungen (150b) in den zweiten Teil (140b) des Innenraums (140) führt.

7. Der Ventilkörper (100) gemäß einem der Ansprüche 4 bis 6,
wobei die wenigstens eine Sensoreinrichtung (180a) oder die Mehrzahl von Sensoreinrichtungen (180a-b) eingerichtet ist/sind, zumindest ein digitales Bild, welches einen Zustand zumindest eines Teils des Innenraums (140) des Ventilkörpers (100) repräsentiert, als die zumindest eine Charakteristik in Form des wenigstens einen Sensorsignals (S_180) oder in Form des jeweiligen der Mehrzahl von Sensorsignalen (S_180a-b) zu erzeugen.

8. Der Ventilkörper gemäß dem Anspruch 7, wobei ein Bereich (164) des Ventilkörpers (100), in welchem sich im Betrieb des Prozessventils (2) ein Absperrkörper (200) zu einem Öffnen und Schließen des Prozessventils (2) bewegt, zumindest abschnittsweise in einem Bildfeld (BF_180) der wenigstens einen oder jeweiligen Sensoreinrichtung (180) liegt.

9. Der Ventilkörper gemäß einem der der Ansprüche 5 bis 8 umfassend:
die zumindest eine Lichtquelle (170b), welche gemeinsam einem ersten zugeordneten der Mehrzahl von licht- und/oder schalltransparenten Elementen (152b) eingerichtet ist, insbesondere monochromatisches Licht in Form einer insbesondere kollimierten Lichtverteilung entlang einer Hauptabstrahlrichtung (H) in den Innenraum (140) des Ventilkörpers (100) einzukoppeln; und
die wenigstens eine Sensoreinrichtung (180a), wobei die wenigstens eine Sensoreinrichtung (180a) gemeinsam mit einem zweiten zugeordneten licht- und/oder schalltransparenten Element (152a) dazu eingerichtet ist, zumindest eine Lichtintensität von durch Schwebeteilchen in einem Prozessfluid gestreutem Licht der entlang der Hauptabstrahlrichtung (H) abgestrahlten, insbesondere kollimierten Lichtverteilung zu erfassen.

10. Der Ventilkörper (100) gemäß einem der vorigen Ansprüche, wobei der Ventilkörper (100) umfasst:
wenigstens einen Verspann-Abschnitt (160) zum Anliegen eines lateralen Bereichs eines als Ventilmembran ausgebildeten Absperrkörpers (200), wobei der Verspannabschnitt (160) eine Sitz-Öffnung (162) zum Verschließen mittels der Ventilmembran umgibt, und wobei die Sitz-Öffnung (162) in den Innenraum (140) des Ventilkörpers (100) und zu dem Ventilsitz (130) führt.

11. Der Ventilkörper (100) gemäß dem Anspruch 4 und 10, wobei eine optische Achse (O_180) der wenigstens einen Sensoreinrichtung (180a-b) oder der Mehrzahl von Sensoreinrichtungen (180a-b) durch einen Abschnitt (114, 124) eines Prozessfluidkanals (110, 120), welcher einen Prozessfluid-Anschluss (112, 122) und die Sitz-Öffnung (162) oder einen anderen Abschnitt des Prozessfluidkanals (110, 120) und die Sitz-Öffnung (162) miteinander verbindet, und durch die Sitz-Öffnung (162) verläuft.

12. Ein Prozessventil (2) umfassend:
den Ventilkörper (100) gemäß einem der vorigen Ansprüche;
einen Absperrkörper (200), insbesondere eine Ventilmembran, welcher in einer geschlossenen Position des Prozessventils (2) auf den Ventilsitz (130) des Ventilkörpers (100) drückt, die wenigstens zwei Prozessfluid-Kanäle (110, 120) voneinander trennt und einen Fluidfluss durch das Prozessventil (2) blockiert, und welcher in einer geöffneten Position des Prozessventils (2) vom Ventilsitz (130) abgehoben ist, die wenigstens zwei Prozessfluid-Kanäle (110, 120) miteinander verbindet und den Fluidfluss durch das Prozessventil (2) erlaubt;
einen Antrieb (300) zum Bewegen einer Ventilstange (310), wobei die Ventilstange (310) entlang einer Stellachse (S) bewegbar gelagert ist und den Absperrkörper (200) bewegt.

13. Ein Verfahren zum Betreiben eines Prozessventils insbesondere gemäß dem Anspruch 12, das Verfahren umfassend:
Betreiben (1010) wenigstens einer Lichtquelle zur Erzeugung von Licht und/oder einer Schallquelle zur Erzeugung von Schall in Reaktion auf ein zugeführtes Ansteuersignal, wobei das von der wenigstens einen Lichtquelle erzeugte Licht und/oder der von der wenigstens einen Schallquelle erzeugte Schall durch ein licht- und/oder schalltransparentes Element in einen durch das licht- und/oder schalltransparente Element abgetrennten Innenraum eines Ventilkörpers des Prozessventils eingekoppelt wird, und wobei das licht- und/oder schalltransparente Element eine Öffnung, die in den Innenraum des Ventilkörpers führt, verschließt; und/oder
Betreiben (1020) wenigstens einer Sensoreinrichtung zur Erzeugung eines Sensorsignals, welches zumindest eine Charakteristik eines durch das licht- und/oder schalltransparente und die Öffnung verschließende Element einfallenden Lichts und/oder Schalls oder eine Charakteristik eines durch ein weiteres licht- und/oder schall-transparentes und eine weitere Öffnung des Ventilkörpers verschließendes Element einfallenden Lichts und/oder Schalls repräsentiert.

14. Das Verfahren gemäß dem Anspruch 13, wobei das Verfahren umfasst:
Öffnen (1002) des Prozessventils, wobei ein den Innenraum des Prozessventils begrenzender Absperrkörper des Prozessventils vom Ventilsitz zumindest abschnittsweise abgehoben ist; und
Betreiben (1010) der wenigstens einen Lichtquelle und/oder der wenigstens einen Schallquelle und gleichzeitiges Betreiben (1020) der wenigstens einen Sensoreinrichtung zum Ermitteln des wenigstens einen digitalen Bildes während der Absperrkörper zumindest abschnittsweise vom Ventilsitz abgehoben ist.

15. Eine Steuereinheit (800) für ein Prozessventil (2), wobei die Steuereinheit (800) dazu ausgebildet ist, das Verfahren gemäß einem der Ansprüche 13 bis 14 auszuführen.
